(19) Europäisches Patentamt
European Patent Office
Office européen des brevets

(11) **EP 3 025 772 A1**

(12) **EUROPÄISCHE PATENTANMELDUNG**

(43) Veröffentlichungstag:
**01.06.2016 Patentblatt 2016/22**

(51) Int Cl.:
***B01D 53/047*** *(2006.01)*     ***B01D 53/053*** *(2006.01)*

(21) Anmeldenummer: **15000861.3**

(22) Anmeldetag: **24.03.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **27.11.2014 DE 102014017600**

(71) Anmelder: **Linde Aktiengesellschaft**
**80331 München (DE)**

(72) Erfinder:
• **Grahl, Matthias**
  **80639 München (DE)**
• **Cichy, Thomas**
  **69412 Eberbach (DE)**
• **Wildgruber, Klaus**
  **80992 München (DE)**

(74) Vertreter: **Gellner, Bernd**
  **Linde AG**
  **Patente und Marken**
  **Dr.-Carl-von-Linde-Strasse 6-14**
  **82049 Pullach (DE)**

(54) **Verfahren und Vorrichtung zur Mengen- und Reinheitskontrolle bei Druckwechseladsorptionsanlagen**

(57)    Die Erfindung betrifft ein Verfahren zur Lastanpassung, Mengen- und Reinheitskontrolle einer Druckwechseladsorptionsanlage, wobei die Druckwechseladsorptionsanlage einen Arbeitszyklus durchläuft der wenigstens einen Produktionstakt umfasst. Dabei erfolgt während des Produktionstaktes eine ununterbrochene Zufuhr eines Feedgases in wenigstens einen Adsorber und der Zeitpunkt der Beendigung des Produktionstaktes wird bestimmt durch eine Detektion der Position einer Beladungsfront in dem wenigstens einen Adsorber oder eine Ermittlung der aus dem wenigstens einen Adsorber während des Produktionstaktes entnommene Menge $M_A(t)$ des Produktgases, wobei die Beendigung des Produktionstaktes erfolgt, wenn die Menge $MA(t)$ größer oder gleich einer vorgegebenen Menge $M_{Design}$ ist, und wobei die Menge $M_A(t)$ aus der dem Produktpuffer entnommenen Menge $Q(t)$ und dem Druckverlauf im Produktpuffer berechnet wird. Die Erfindung betrifft weiterhin eine Druckwechseladsorptionsanlage zur Durchführung des Verfahrens.

Fig. 1

**Beschreibung**

Die Erfindung betrifft ein Verfahren zur Lastanpassung, Mengen- und Reinheitskontrolle einer Druckwechseladsorptionsanlage gemäß Anspruch 1 und eine Vorrichtung zur Durchführung des Verfahrens gemäß Anspruch 11 oder 12.

Im Stand der Technik ist eine Mengenkontrolle der Produktmenge innerhalb einer Druckwechseladsorptionsanlage bekannt, die mittels einer Mess- und Regelvorrichtung erfolgt. Dabei wird insbesondere bei Anlagen, die einen Produktpuffer aufweisen, die Produktmenge geregelt, die dem Produktpuffer entnommen wird. Diese Regelvorrichtung kann gleichzeitig auch als Druckregelung verwendet werden. Ist die abgenommene Produktmenge kleiner als eine vorgegebene Designmenge, wird erst der Druck geregelt, wobei anschließend bei Erreichen der Designmenge die Mengenregelung in Kraft tritt und ein Überfahren der Anlage verhindert.

Eine Lastanpassung erfolgt bei PSA-Anlagen (Pressure Swing Adsorption) in der Regel durch Verlängerung des Arbeitszyklus. Im Stand der Technik sind insbesondere zwei Alternativen bekannt mittels derer eine derartige Verlängerung erfolgen kann.

In einer Alternative erfolgt eine Verlängerung des Arbeitszyklus mittels einer Drosselung des Feedgasmengenstroms bei reduzierter Produktabnahme. Die Drosselung kann durch eine Drehzahlregelung eines Feedgasverdichters oder durch eine Regelung des Mengenstroms aus einem Vorratspuffer erfolgen. Der Takt, in welchem Feedgas einem Adsorber zugeführt wird, wird entsprechend verlängert. Dadurch wird dem Adsorber somit immer ungefähr dieselbe absolute Feedgasmenge zugeführt und dieselbe absolute Produktmenge abgenommen. Die Zufuhr und Abnahme erfolgt jeweils verteilt über einen längeren Zeitraum.

In einer anderen Alternative erfolgt eine Verlängerung des Arbeitszyklus bei zunächst gleichbleibendem momentanen Feedgasmengenstrom. Der Arbeitszyklus weist zusätzlich einen sogenannten Leerlauftakt auf. Während des Leerlauftaktes strömt kein Feedgas zur Anlage und es wird kein Produkt erzeugt. Bei Anwendung dieser

Alternative ist ein Produktpuffer notwendig, aus welchem während des Leerlauftaktes die geforderte Produktmenge entnommen wird. Ein eventuell vorhandener Feedgasverdichter läuft während des Leerlauftaktes bei reduzierter Energieaufnahme. Die mittlere Feedgasmenge sinkt in diesem Fall ungefähr proportional zur reduzierten Produktabnahme.

Diese Alternative wird vor allem dann angewandt, wenn eine Regelung der Feedgasmenge schwer möglich oder unerwünscht ist, wie beispielsweise bei einem stark schwankenden Abnahmeprofil oder wenn eine Drehzahlregelung hohe Kosten verursacht. Es ist für die Feedgasmenge kein Regelmechanismus notwendig, da diese nur zwischen 100% und Null variiert. Insbesondere wird diese Alternative angewandt, wenn ohnehin ein Produktpuffer notwendig ist. Dies ist beispielsweise der Fall wenn, abgesehen von einem Leerlauftakt, auch während weiterer Takte kein Produkt erzeugt wird oder der Produktdruck sonst stark schwanken würde, wie es insbesondere bei Verfahren mit nur einem oder zwei Adsorbern der Fall ist.

Bei beiden Alternativen besteht die Notwendigkeit, eine Produktabnahme, die größer als eine vorgegebene Designmenge ist, zu verhindern. Dies ist beispielsweise notwendig, wenn die Feedgasmenge zur Anlage limitiert ist. Diese Limitierung kann in der maximalen Kapazität des Feedgasverdichters oder in einer maximal zulässigen Strömungsgeschwindigkeit in der Schüttung bestehen oder durch Regenerierbedingungen gegeben sein, wie beispielsweise der Größe der Vakuumpumpe bei VPSA-Anlagen (Vacuum Pressure Swing Adsorption). Grundsätzlich gibt es somit eine maximale Produktmenge, die aus der Druckwechseladsorptionsanlage abgezogen werden kann.

Nachteilig an den bekannten Methoden zur Mengenbegrenzung des Produktstroms aus einem Produktpuffer ist, dass überhaupt ein Regelventil notwendig ist und somit insbesondere die Störanfälligkeit erhöht wird. Weiterhin kann ein Überfahren des Adsorbers im instationären Fall, wie beispielsweise beim Starten der Anlage, nicht verhindert werden. Die Zeit bis zum Erreichen einer spezifizierten Reinheit erhöht sich dadurch erheblich. Insbesondere bei großen Produktpuffern stellt dies ein signifikantes Problem dar. Auch ist ein kurzzeitiges Überschreiten der Designmenge auch dann nicht möglich, wenn die über einen relativ kurzen Zeitraum gemittelte Produktmenge die Designmenge nicht überschreitet und deshalb kein Reinheitseinbruch zu erwarten ist. Schwankt die abgenommene Produktmenge relativ stark um den vorgegebenen Designwert, wird die Mengenbegrenzung immer wieder anspringen, so dass die volle Designmenge unter Umständen nicht geliefert werden kann. Es ist zwar möglich, die Mengenbegrenzung bzw. Mengenregelung relativ träge einzustellen. Dies verhindert allerdings dann ein Überfahren der Anlage nicht mehr zuverlässig.

Durch den Einsatz einer Mengenregelung zwischen Adsorber und Produktpuffer können einige der oben benannten Nachteile umgangen werden. So kann z.B. die dem Puffer entnommene Produktmenge die Designmenge während eines instationären Vorgangs durchaus überschreiten und somit auch bei starken Schwankungen im Mittel die volle Designmenge geliefert werden.

Eine solche Mengenregelung birgt aber selbst weitere Nachteile:

Der Mengenstrom zwischen Adsorber und Produktpuffer ist stark diskontinuierlich. Je nach Verfahren gibt es mehr oder weniger lange Phasen, in denen kein Produkt in den Produktpuffer strömt. Der Zeitraum während dessen Produkt in den Produktpuffer strömt, kann sehr kurz (unter anderem nur wenige Sekunden) sein. Dieser Mengenstrom ist aus diesem Grund nur schwer zu messen und zu regeln. Weiterhin muss in der Regel diese zweite Mengenmessung zwischen Adsorber und Produktpuffer zusätzlich zu einer ersten Mengenmessung nach dem Produktpuffer erfolgen, da sie die erste Mengenmessung nicht ersetzen kann, denn diese zweite Mengenmessung ist starken Schwankungen unterworfen und somit für eine Bilanzierung oder eine Abrechnung ungeeignet.

Die EP 2181752 A1 beschreibt eine Begrenzung des Produktstroms, der aus dem Adsorber in den Produktpuffer strömt, wobei die Entnahme des Produkts aus dem Adsorber bei geschlossener Feedgasleitung erfolgt. Ein Überfahren des Adsorbers wird beispielsweise dadurch verhindert, dass der Adsorber nur um eine bestimmte Druckdifferenz in Richtung Produktpuffer hin entspannt wird. Nachteilig ist, dass die Unterbrechung der Feedgaszufuhr während des Produktionstaktes einen signifikanten Zeitverlust darstellt. Auch fällt der Druck während des Produktionsschritts, wodurch die Kapazität vermindert wird.

Hiervon ausgehend liegt daher der vorliegenden Erfindung die Aufgabe zugrunde, die oben beschriebene Nachteil zu beseitigen und die abgenommene Produktmenge auf einfache Weise zu begrenzen.

Diese Aufgabe wird durch ein Verfahren zur Lastanpassung, Mengen- und Reinheitskontrolle einer Druckwechseladsorptionsanlage mit den Merkmalen des Anspruchs 1 gelöst.

Danach ist vorgesehen, dass bei einem Verfahren zur Lastanpassung, Mengen- und Reinheitskontrolle einer Druckwechseladsorptionsanlage die Druckwechseladsorptionsanlage einen Arbeitszyklus durchläuft und der Arbeitszyklus wenigstens einen Produktionstakt umfasst, wobei während des Produktionstaktes eine ununterbrochene Zufuhr eines Feedgases in wenigstens einen Adsorber erfolgt und der Zeitpunkt der Beendigung des Produktionstaktes bestimmt wird durch

- eine Detektion der Position einer Beladungsfront in dem wenigstens einen Adsorber, oder
- eine Ermittlung der aus dem wenigstens einen Adsorber während des Produktionstaktes entnommene Menge $M_A(t)$ des Produktgases, wobei die Beendigung des Produktionstaktes erfolgt, wenn die Menge $M_A(t)$ größer oder gleich einer vorgegebenen Menge $M_{Design}$ ist, und wobei die Menge $M_A(t)$ aus der dem Produktpuffer entnommenen Menge $Q(t)$ und dem Druckverlauf im Produktpuffer berechnet wird.

Das erfindungsgemäße Verfahren eignet sich sowohl für Anlagen mit nur einem Adsorber als auch für Anlagen mit zwei oder mehr im Wechsel betriebenen Adsorbern.

Unter dem Begriff "Mengenkontrolle" ist im Sinne der Erfindung ein Verfahren zu verstehen, welches es ermöglicht, die Abnahme einer Produktmenge, die größer als eine vorgegebene Designmenge ist, zu verhindern. Somit wird eine unzulässig hohe Verunreinigung des Produkts verhindert.

Unter dem Begriff "Lastanpassung" ist im Sinne der Erfindung eine Anpassung einzelner Arbeitsschritte oder Einsatzstoffe an eine entnommene Produktmenge (Verbrauch) zu verstehen, welche es ermöglicht Einsatzstoff und Energie zu sparen. Beispielsweise kann der Umfang der verwendeten Feedgasmenge angepasst werden.

Unter dem Begriff "Arbeitszyklus" ist im Sinne der Erfindung eine Abfolge verschiedener Arbeitsschritte einer Druckwechseladsorptionsanlage, wie beispielsweise ein Produktionsschritt, in welchem Produkt produziert wird oder ein Regenerationsschritt, in welchem ein Adsorber regeneriert wird, zu verstehen, wobei die Arbeitsschritte in einer vorgegebenen Reihenfolge nacheinander erfolgen. Ein Arbeitsakt endet mit Beendigung des letzten Arbeitsschrittes eines Arbeitszyklus und ein neuer Arbeitszyklus kann, beginnend mit dem ersten Arbeitsschritt des Arbeitszyklus, anschließend erneut ausgeführt werden.

Unter dem Begriff "Produktionstakt" ist im Sinne der Erfindung ein Arbeitsschritt eines Arbeitszyklus zu verstehen, in welchem gereinigtes Produktgas aus einem Adsorber abgeleitet wird, wobei in dem Adsorber eine Abtrennung wenigstens einer stärker adsorbierenden Komponente aus einem Rohprodukt erfolgt.

Unter dem Begriff "Schüttung" ist im Sinne der Erfindung Adsorptionsmaterial innerhalb eines Adsorbers zu verstehen. Unter der Gesamthöhe einer Schüttung ist der Abstandzwischen Eintritt des Feedgases in die Schüttung und Austritt des Produktgases aus der Schüttung zu verstehen.

Unter dem Begriff "Feedgas" ist im Sinne der Erfindung eine Mischung von Gasen (Rohprodukt) zu verstehen, die neben mindestens einer weniger stark adsorbierenden Komponente (angereichert im Produktgas) wenigstens noch eine weitere, stärker adsorbierenden Komponente (angereichert im Abgas) aufweist.

Unter dem Begriff "Beladungsfront" ist im Sinne der Erfindung die Position innerhalb eines Adsorbers zu verstehen, bis zu der dieser Adsorber bereits in hohem Maße mit der abzutrennenden Komponente beladen ist, z.B. zu mehr als 50% einer maximalen Beladungskapazität für diese Komponente. Während des weiteren Voranschreitens des Adsorptionsvorgangs kann die abzutrennende Komponente bis zu dieser Position nur noch in geringem Maße adsorbieren und wird erst jenseits der aktuellen Position der Beladungsfront in größerem Maße zurückgehalten. Auf diese Weise wandert die Adsorptionsfront während des Produktionstaktes in Richtung Produktgasaustritt.

Unter dem Begriff "Produktgas" ist im Sinne der Erfindung sowohl ein im Wesentlichen aus einem chemischen Element (wie beispielsweise Sauerstoff) bestehendes Gas ("reines Gas") als auch ein Gas, welches eine Mischung verschiedener chemischer Elemente aufweist, zu verstehen. Dabei bezieht sich der Begriff "reines Gas" nicht ausschließlich auf eine absolute Reinheit (100 % des entsprechenden chemischen Elements) sondern auf ein Produktgas, welches die Anforderungen an dem gewünschten Reinheitsgrad erfüllt. Je nach Anforderungen an das entsprechende Produkt weist somit ein Produktgas unterschiedliche Reinheitsgrade auf. Unter dem Begriff "Designmenge" ist im Sinne der Erfindung eine definierte Menge an Produktgas zu verstehen, die durch die Anlage in einem Arbeitszyklus unter Einhaltung des gewünschten Reinheitsgrades bereitgestellt werden kann.

Unter dem Begriff "Produktpuffer" ist im Sinne der Erfindung eine Vorrichtung zu verstehen, die ausgebildet ist Produktgas, zu lagern und das Produktgas einem Verbraucher bei Bedarf zuzuführen.

Das erfindungsgemäße Verfahren ermöglicht eine Mengenbegrenzung, die es erlaubt ein Überfahren des wenigstens einen Adsorbers einer Druckwechseladsorptionsanlage, insbesondere einer PSA- oder VPSA-Anlage, zu verhindern. Dabei wird nicht die Menge begrenzt, die aus dem Produktpuffer entnommen wird, sondern der Produktionstakt wird zeitlich so limitiert, dass eine Überlastung des wenigstens einen Adsorbers ausgeschlossen ist. Dadurch entfällt die Notwendigkeit eines Regelventils in der Leitung nach einem Produktpuffer, die Anlage wird somit einfacher und weniger störanfällig. Weiterhin wird ein Überfahren des wenigstens einen Adsorber auch während des Startens der Anlage verhindert, so dass die geforderte Produktreinheit nach Stillstand und Entleeren des Produktpuffers schneller erreicht wird. Auch wird eine absolut stufenlose Lastanpassung an den Bedarf des Kunden ermöglicht.

Das erfindungsgemäße Verfahren weist eine ununterbrochene Feedgaszufuhr zum Adsorber während des Produktionstaktes auf. Dadurch fällt, im Gegensatz zu der im Stand der Technik beschriebenen Entnahme des Produkts bei geschlossener Feedgasleitung, kein Zeitverlust an. Bei einer Unterbrechung der Feedgaszufuhr während des Produktionstaktes müsste der Feedgasverdichter größer ausfallen, welches einen höheren Raumbedarf und höhere Kosten bedingt. Dies ist insbesondere bei sehr großen Anlagen ein signifikanter Nachteil.

Weiterhin läuft der Produktionsschritt bei einer ununterbrochenen Feedgaszufuhr bei steigendem Druck ab, während bei Unterbrechung der Feedgaszufuhr der Druck während des Produktionsschrittes fällt und somit die Kapazität der Druckwechseladsorptionsanlage gemindert ist. Auch ist bei einer ununterbrochenen Feedgaszufuhr der mittlere Druckunterschied zwischen Feedgasdruck und Produktdruck deutlich niedriger als bei im Stand der Technik bekannten Anlagen, so dass der Energiebedarf bei gleichem Abgabedruck stark sinkt.

In einer Ausführungsform erfolgt im Produktionstakt eine Überleitung von Produktgas aus dem wenigstens einen Adsorber in einen Produktpuffer während gleichzeitig Feedgas in den Adsorber geleitet wird. Ein Beenden des Produktionstaktes erfolgt durch Beendigung der Überleitung des Produktgases in den Produktpuffer und der Einleitung des Feedgases in den Adsorber. Die Überleitung kann beispielsweise mittels eines geeigneten Gasleitungssystems erfolgen, wobei eine Beendigung durch Schließen eines am Gasleitungssystem angeordneten Ventils erfolgt.

In einer Ausführungsform weist die Druckwechseladsorptionsanlage einen Arbeitszyklus auf, der wenigstens einen Produktionstakt enthält, wobei während des Produktionstaktes eine ununterbrochene Zufuhr eines Feedgases in wenigstens einen Adsorber erfolgt. Dabei wird der Zeitpunkt der Beendigung des Produktionstaktes durch die aus dem wenigstens einen Adsorber während des Produktionstaktes entnommene Menge $M_A(t)$ des Produktgases bestimmt. Der Produktionstakt wird beendet, wenn die Menge $M_A(t)$ größer oder gleich einer vorgegebenen Menge $M_{Design}$ ist, wobei $M_A(t)$ aus der dem Produktpuffer entnommenen Menge $Q(t)$ und dem Druckverlauf im Produktpuffer berechnet wird.

Während des Produktionstaktes strömt somit Produktgas, bestehend im Wesentlichen aus der weniger stark adsorbierenden Komponente, in den Produktpuffer. Gleichzeitig wird dem Produktpuffer eine bestimmte, unter Umständen auch schwankende, Menge entnommen und einem Verbraucher zugeführt. Diese entnommene Menge des Produktgases wird, beispielsweise mittels einer dem Produktpuffer nachgeordneten Mengenmesseinrichtung, gemessen. Aus dieser entnommenen Produktmenge und dem Druckverlauf im Produktpuffer, welcher beispielsweise mittels einer dem Produktpuffer nachgeordneten Druckmesseinrichtung gemessen wird, wird eine Menge $M_A(t)$ ermittelt, die dem Adsorber entnommen und dem Produktpuffer während des Produktionstaktes zugeführt wurde. Überschreitet die dem Adsorber entnommene Menge $M_A(t)$ einen bestimmten (für die Größe der Anlage typischen) Wert $M_{Design}$ wird das Abströmen von Produktgas in den Produktpuffer und die Einleitung von Feedgas in den Adsorber beendet.

In einer Ausführungsform erfolgt die Bestimmung der Menge $M_A(t)$ gemäß der folgenden Formel

$$M_A(t) = \int_0^t Q(t)dt + M_P(0)\left\{\left(\frac{P(t)}{P(0)}\right)^{\frac{1}{k}} - 1\right\}$$

berechnet wird, wobei

- t die Zeit seit Beginn des Produktionstaktes in Sekunden ist,
- $M_A(t)$ die dem Adsorber seit Beginn des Produktionstaktes entnommene Menge in kg ist,
- $Q(t)$ die aus dem Produktpuffer während des Produktionstaktes entnommenen Menge in kg ist,

- Mp(0) die Menge an Produktgas in kg im Puffer zu Beginn des Produktionstaktes ist, wobei Mp(0) gemäß der folgenden Formel

$$M_p(0) = V * \rho(t=0),$$

berechnet wird, wobei

- V das Volumen des Produktpuffers in $m^3$ ist, und
- $\rho$ die Dichte des Produktgases im Puffer in $kg/m^3$ bei t = 0 ist,

- P(t) der Druck im Produktpuffer zur Zeit t in bar ist,
- P(0) der Druck im Produktpuffer zur Zeit t = 0 in bar ist, und
- K jede reelle Zahl von 1 bis 1.4 ist.

Alle Werte, die mit der Einheit bar bezeichnet werden, beziehen sich auf den absoluten Druck (bar absolut). Dabei ist K unter isothermen Bedingungen 1 und unter adiabatischen Bedingungen 1.4. Je nach vorliegenden Bedingungen innerhalb der Druckwechseladsorptionsanlage erfolgt eine Anpassung von K an die realen Bedingungen, so dass K aus einem Bereich von 1 bis 1.4 ausgewählt wird.

Insbesondere ist der Faktor K abhängig vom Grad der Wärmeisolation des Behälters des Produktpuffers und der Größe des verwendeten Puffers. Ein sehr großer, isolierter Puffer weist somit Werte im Bereich von 1.4 auf, wohingegen ein kleiner, nicht isolierter Puffer Werte aufweist, die näher bei 1 liegen.

Obige Gleichung ermöglicht eine Bestimmung der aus dem Adsorber entnommenen Menge mittels ohnehin in der Anlage vorhandenen Druckmesseinrichtungen und Mengenmesseinrichtungen am Produktpuffer. Weitere Messeinrichtungen, insbesondere Mengenmesseinrichtungen am Adsorber sind nicht notwendig. Die Anlage wird somit einfacher und weniger störanfällig. Die Auswertung der über die Mengenmesseinrichtung und Druckmesseinrichtung ermittelten Daten kann über eine mit diesen verbundene Steuer-und Regelungseinrichtung erfolgen, welche ein Impulssignal an das Feedgasventil und das Produktventil sendet, wenn $M_A(t)$ größer oder gleich einer vorgegebenen Menge $M_{Design}$ ist. Das Feedgasventil und das Produktventil werden daraufhin geschlossen und somit der Produktionstakt beendet.

In einer Ausführungsform weist die Druckwechseladsorptionsanlage einen Arbeitszyklus auf ,der wenigstens einen Produktionstakt umfasst, wobei während des Produktionstaktes eine ununterbrochene Zufuhr des Feedgases in den wenigstens einen Adsorber erfolgt und der Zeitpunkt der Beendigung des Produktionstaktes bestimmt wird durch eine Detektion der Position der Beladungsfront in dem wenigstens einen Adsorber. Es wird folglich das Erreichen einer in dem wenigstens einen Adsorber vorgegebenen Lage durch die Beladungsfront der wenigstens einen abzutrennenden Komponente detektiert, wobei die vorgegebene Lage entlang der Strömungsrichtung des Feedgases in dem Adsorber angeordnet ist.

Während des Produktionstaktes bewegt sich die Beladungsfront, wie beispielsweise eine Stickstoff-Front bei der Sauerstofferzeugung aus Luft, durch den Adsorber in Richtung Produktaustritt. Um eine übermäßige Verunreinigung des Produktgases mit dieser abzutrennenden Komponente zu verhindern, ist es notwendig, dass die Beladungsfront am Ende des Produktionsschrittes nur bis zu einer vorgegebenen Lage im Adsorber vordringen kann. Wird ein Erreichen der Beladungsfront in der vorgegebenen Lage detektiert, wird der Produktionstakt sofort oder nach einem vordefinierten Zeitraum beendet.

In einer Ausführungsform wird der Produktionstakt beendet, wenn die Beladungsfront eine vorgegebene Endlage in Strömungsrichtung erreicht, bis zu der die Beladungsfront gerade noch vordringen darf, um eine Verunreinigung des Produktgases zu vermeiden. Diese Endlage kann relativ weit entfernt vom Produktaustritt bzw. der Produktaustrittsseite der Schüttung liegen (10 bis 50% der Gesamtschütthöhe), insbesondere dann, wenn nach Beendigung des Produktionstaktes noch eine Vorwärtsentspannung stattfindet, wie z. B. ein Druckausgleich mit einem anderen Adsorber oder einem Puffer, da die Beladungsfront sonst während der Vorwärtsentspannung zu weit vorwandert und beispielsweise das beim Druckausgleich zwischen zwei Behältern transferierte Gas unzulässig hoch verunreinigt ist.

Die Endlage ist insbesondere auch abhängig von der geforderten Reinheit: je höher der geforderte Reinheitsgrad des Produktes, umso weiter entfernt wird die Endlage von Produktaustritt bzw. der Produktaustrittsseite der Schüttung entfernt liegen.

Dabei erfolgt die Detektion der Position der Beladungsfront mittels Messung einer zeitlichen Veränderung von physikalischen Parametern wie Temperatur, Druckverlust oder Konzentration über eine geeignete Messeinrichtung in einer vorgegebenen Lage. So zeigt ein plötzlicher Anstieg der Konzentration der stärker adsorbierenden Komponente direkt an, dass die entsprechende Position von der Beladungsfront erreicht wird. Dies führt in vielen Fällen durch die frei werdende Adsorptionswärme zu einer detektierbaren Temperaturerhöhung. Schließlich gibt es im Bereich der Beladungsfront auch Änderungen des Massenstroms, so dass sich der lokale Druckverlust ändert. Wird an einer vorgegebenen Lage (Position der Messeinrichtung) eine signifikante Änderung einer der oben genannten Größen detektiert, kann auf das Erreichen dieser vorgegebenen Lage durch die Beladungsfront geschlossen werden, wobei die Position der Messeinrichtung, gemessen in Strömungsrichtung des Feedgases, vor der Produktaustrittsseite der Schüttung angeordnet ist.

In einer Ausführungsform beträgt der Abstand zwischen der vorgegebenen Lage (Position der Messeinrichtung) und der Produktaustrittsseite der Schüttung 5 % bis 50 %, insbesondere 10 % bis 30 %, bezogen auf die Gesamtschütthöhe in dem Adsorber. Wenn beispielsweise die Gesamtschütthöhe 2 m beträgt kann die Messeinrichtung 20 cm (10 % der Gesamtschütthöhe) vor der Produktaustrittsseite der Schüttung, gemessen in Strömungsrichtung des Feedgases, angeordnet sein.

Es erfolgt grundsätzlich eine Detektion der Beladungsfront in der vorgegebenen Lage (Position der Messeinrichtung). Je nach Bedarf, insbesondere in Abhängigkeit von den Betriebsbedingungen oder der erwünschten Reinheit, wird der Produktionstakt dann

- sofort bei der Detektion der Beladungsfront in der vorgegebenen Lage beendet, oder
- noch einen vordefinierten Zeitraum aufrechterhalten.

Eine sofortige Beendigung erfolgt, wenn die vorgegebene Endlage der vorgegebenen Lage (Position der Messeinrichtung) im Wesentlichen entspricht.

Der Produktionstakt wird noch einen vordefinierten Zeitraum aufrechterhalten, wenn die vorgegebene Endlage nach der vorgegebenen Lage (Position der Messeinrichtung), gemessen in Strömungsrichtung des Feedgases, liegt. Es ist nicht immer möglich, eine zur Bestimmung der Beladungsfront geeignete Messung an der Stelle anzuordnen, an welcher im Betrieb auch die Endlage der Beladungsfront liegt bzw. erwartet wird. Die vorgegebene Endlage kann sich - je nach Bedarf- ändern. Eine andere Endlage ist beispielsweise notwendig, wenn sich die Betriebsbedingungen oder die erwünschte Reinheit ändern. Eine Anordnung der Messeinrichtung in einem gewissen Abstand (siehe oben) zu einer vorgegebenen Endlage (diese entspricht einer Endlage, welche bei einem bei einem gewöhnlichen Betrieb einer Vorrichtung zu erwarten ist) bzw. der Produktaustrittsseite der Schüttung ermöglicht einen flexiblen Betrieb einer Anlage und es kann auf einfache Art und Weise auf geänderte Bedingungen (Betriebsbedingungen oder der Reinheit) reagiert werden. Unter einem gewöhnlichen Betrieb werden die Bedingungen verstanden, für welche die Anlage hauptsächlich vorgesehen wurde.

Der vordefinierten Zeitraum, gemessen ab der Detektion der Beladungsfront in der vorgegebenen Lage (Position der Messeinrichtung), bis zur Beendigung des Produktionstaktes, ist von verschiedenen Parametern abhängig, wie den Betriebsbedingungen, dem Abstand zwischen der Position der Messeinrichtung und der vorgegebenen Endlage, also der Wegstrecke, die die Beladungsfront zurücklegen muss, um nach der Detektion die vorgegebene Endlage zu erreichen und der gewünschten Reinheit (siehe bezüglich der Reinheit die Erläuterungen weiter oben).

In einer Ausführungsform erfolgt die Bestimmung der Position der Beladungsfront mittels einer Messung des Druckabfalls über eine Distanz von einigen cm (insbesondere 5 -25 cm, bevorzugt 5 - 10 cm). Die Messung des Druckabfalls erfolgt über diese geringe Distanz entlang der Strömungsrichtung des Feedgases, wobei das Erreichen der durch die Messung vorgegebenen Lage (Position der Messeinrichtung) durch die Beladungsfront über einen signifikanten Anstieg des Druckabfalls von z.B. > 10% charakterisiert ist. Der Druckabfall steigt an, wenn die Beladungsfront die Druckmessstrecke überstreicht, da die abzutrennende Komponente nicht mehr adsorbiert wird und somit der Mengenstrom ansteigt. Diese Bestimmung der Position der Beladungsfront ermöglicht die Bestimmung des Zeitpunktes, in welchem der Produktionstakt beendet werden muss. Beispielsweise kann die Druckabfallmessung an einer Lage angebracht sein, bis zu der die Beladungsfront gerade noch vordringen darf, um eine Verunreinigung des Produktgases zu vermeiden, wie beispielsweise im Wesentlichen kurz vor dem Produktaustritt bzw. der Produktaustrittsseite der Schüttung. Dann wird der Produktionsschritt genau in dem Moment beendet, wenn ein signifikanter Anstieg des Druckabfalls detektiert wird. Es wird somit das Erreichen der Endlage durch die Beladungsfront detektiert.

Alternativ kann die Druckmessstelle auch etwas weiter von der Endlage entfernt in einer vorgegebenen Lage angeordnet sein. Nach Detektieren des Anstiegs des Druckabfalls in der vorgegebenen Lage kann der Produktionsschritt dann noch für einen vordefinierten Zeitraum aufrechterhalten werden, bevor er dann beendet wird. Der Vorteil einer solchen Anordnung besteht darin, dass man flexibel auf z.B. geänderte Reinheitsanforderungen reagieren kann, indem man die Zeit bis zur Beendigung des Produktionsschrittes anpasst.

Alternativ zum Druckabfall kann auch ein Anstieg der Konzentration der abzutrennenden Komponente in der Gasphase oder eine Temperaturänderung , bedingt durch die mit der Adsorption verbundene Adsorptionswärme, zur Detektion des Erreichens der vorgegebenen Lage (Position der Messeinrichtung) durch die Beladungsfront herangezogen werden.

Die Auswertung der über die Messeinrichtung ermittelten Daten kann über eine damit verbundene Steuer-und Regelungseinrichtung erfolgen, welche ein Impulssignal an das Feedgasventil und das Produktventil sendet, wenn an der durch die Messeinrichtung vorgegebenen Position die Beladungsfront detektiert wird. Alternativ kann die Steuer- und Regelungseinrichtung ein Impulssignal senden, wenn nach der Detektion der Beladungsfront ein vordefinierter Zeitraum verstrichen ist.

In einer Ausführungsform weist das Verfahren einen Leerlauftakt vor dem Arbeitszyklus auf. Im Leerlauftakt kann Produktgas aus dem Produktpuffer entnommen werden. Die Länge des Leerlauftaktes ist abhängig vom Lastfall, also der dem Produktpuffer entnommenen Menge. Bei 100% Last ist die Länge praktisch Null und nach Beendigung eines Arbeitszyklus folgt direkt ein neuer Arbeitszyklus. Bei einer geringeren Entnahme von Produktgas wird ein erneuter Arbeitszyklus für eine bestimmte Zeit ausgesetzt, erst anschließend beginnt ein neuer Arbeitszyklus und neues Produktgas wird in den Produktpuffer geleitet. Die Zeitdauer dieses Leerlauftaktes kann auf verschiedene Weisen bestimmt werden.

Beispielsweise kann die Zeitdauer aus einem Vergleich der aktuell abgenommenen Menge mit einer angenommenen Designmenge der Anlage bestimmt werden. Nach Erreichen der Designmenge wird der Leerlauftakt beendet. Eine andere Methode besteht darin, mittels des Druckverlaufs im Produktpuffer und der dem Produktpuffer entnommenen Menge den Zeitpunkt vorauszuberechnen, an dem ein vorgegebener Minimaldruck im Puffer unterschritten würde. Es wird der Leerlauftakt dann so rechtzeitig beendet, dass der Produktpuffer vor Unterschreiten des Minimaldrucks wieder mit neuem Produkt gefüllt wird. Dabei ist zu berücksichtigen, dass nach Beendigung des Leerlauftaktes nicht unmittelbar wieder Produkt in den Puffer strömen kann, da zunächst einmal der Adsorber wieder den Pufferdruck erreichen muss.

In einer Ausführungsform weist der Arbeitszyklus vor dem Produktionstakt einen Druckaufbautakt auf. Dabei erfolgt der Druckaufbau in dem Adsorber durch ein Einleiten des Feedgases in den Adsorber. Das Feedgas kann beispielsweise aus einem Feedgasverdichter über ein geeignetes Gasleitungssystem mittels Öffnen eines daran angeordneten Ventils (Feedgasventil) in den Adsorber geleitet werden. Der Druckaufbau wird beendet, wenn der Druck im Adsorber größer oder gleich dem Druck im Produktpuffer ist. Es erfolgt dann ein Übergang in den Produktionstakt. Die Einleitung des Feedgases erfolgt an einer Seite des Adsorbers, beispielsweise der unteren Seite des Adsorbers, (Feedgaseinleitung), die einer weiteren Seite des Adsorbers, beispielsweise der "oberen" Seite des Adsorbers, gegenüberliegt (Produktgasaustritt), so dass das eingeleitete Feedgas (Rohprodukt) die gesamte Länge des Adsorbers durchlaufen muss, um den Produktgasaustritt zu erreichen.

Im Produktionstakt erfolgt eine Überleitung von Produktgas aus dem wenigstens einen Adsorber in einen Produktpuffer. Das Produktgas kann beispielsweise aus dem Adsorber am Produktaustritt über ein geeignetes Gasleitungssystem mittels Öffnen eines daran angeordneten Ventils (Produktventil) in den Produktpuffer geleitet werden. Das Feedgasventil ist während des Produktionstaktes weiterhin geöffnet. Die Beendigung des Druckaufbaus erfolgt somit durch das Öffnen des Produktventils. Dadurch strömt Feedgas von einer Seite (Feedgaseinleitung) in den Adsorber ein und auf der gegenüberliegenden Seite (Produktaustritt) strömt Produktgas aus dem Adsorber ab, wodurch sich der Druckanstieg in der Regel verlangsamt.

In einer Ausführungsform weist der Arbeitszyklus nach dem Produktionstakt einen Gleichstrom-Entspannungstakt auf, d. h. eine Entspannung in die gleiche Richtung wie das Feedgas den Adsorber durchströmt. Dabei erfolgt eine Entspannung des Adsorbers mittels eines Druckausgleiches im Gleichstrom in einen Druckpuffer. Der Druckpuffer umfasst eine Vorrichtung, die geeignet ist teilgereinigtes Produktgas bei einem vorgegeben Druck aufzunehmen, wobei der Druckpuffer über ein geeignetes Gasleitungssystem mit dem Adsorber verbunden ist, insbesondere ist das Gasleitungssystem am Produktaustritt angeordnet. Im Entspannungstakt wird die Zuleitung des Feedgases in den Adsorber und das Abströmen des Produktgases aus dem Adsorber unterbrochen (der Produktionstakt wurde beendet) und ein Ventil (Entspannungsventil), welches an dem Gasleitungssystem zwischen dem Druckpuffer und dem Adsorber angeordnet ist, wird geöffnet. Vor dem Öffnen des Entspannungsventils weist der Adsorber einen größeren Druck als der Druckpuffer auf. Nach dem Öffnen des Entspannungsventils strömt somit teilgereinigtes Produktgas in den Druckpuffer, wobei der Druck im Druckpuffer steigt und im Adsorber sinkt. Im Fall einer Verwendung mehrerer Adsorber kann eine Entspannung auch über eine Verbindung mit einem benachbarten Adsorber erfolgen, wobei der Druck im benachbarten Adsorber bei der Entspannung des ersten Adsorbers ansteigt.

In einer Ausführungsform weist der Arbeitszyklus nach dem Gleichstrom-Entspannungstakt einen Regenerationstakt auf. Der Entspannungstakt wird durch ein Schließen des Entspannungsventils beendet. Es kann eine Regeneration des Adsorbers mittels eines Entspannens im Gegenstrom zur Atmosphäre über ein Gasableitungssystem, welches insbesondere an der dem Produktaustritt gegenüberliegenden Seite des Adsorbers (Feedgaseinleitung) angeordnet ist, erfolgen. Durch das Öffnen eines Ventils (Abgasventil) an diesem Gasableitungssystem strömt Gas, welches einen hohen Anteil der abzutrennenden Komponente aufweist, aus dem Adsorber (Abgas). Der Druckausgleich mit der Atmosphäre ermöglicht, dass auch adsorbierte Komponenten sich "lösen" und als Abgas abgeleitet werden, so dass der Adsorber regeneriert wird und für eine erneute Abtrennung zur Verfügung steht.

Alternativ oder zusätzlich kann zur Regenerierung auch ein Spülgasstrom eingesetzt werden. Der Spülgasstrom besteht insbesondere aus teilgereinigtem Produktgas und wird insbesondere an der Stelle des Produktaustritts in den Adsorber eingeleitet. Durch den Spülgasstrom wird der Partialdruck der abzutrennenden Komponente in der Gasphase reduziert und so die Desorption unterstützt. Der Spülgasstrom kann beispielsweise aus einer Spülgasvorrichtung, aus dem Druckpuffer oder, im Fall einer Verwendung mehrerer Adsorber, aus einem benachbarten Adsorber bereitgestellt werden. Bei der Verwendung eines Spülgases aus dem Druckpuffer oder einem benachbarten Adsorber (siehe die späteren Erläuterungen) kann der Spülgasstrom durch eine (zumindest teilweise) Öffnung des Gleichstrom-Entspannungsventils bereitgestellt werden.

Alternativ oder zusätzlich kann die Regenerierung bei einem Druck unterhalb des Umgebungsdrucks durch Evakuierung des Adsorbers mit Hilfe einer Vakuumpumpe erfolgen.

In einer Ausführungsform weist der Arbeitszyklus nach dem Regenerationstakt einen Gegenstrom-Bespannungstakt auf. Dabei wird der Adsorbers mit Rohprodukt, insbesondere mit teilgereinigtem Produktgas, im Gegenstrom, also entgegengesetzt zur Feedgasrichtung, bespannt, wobei sich der Druck im Adsorber erhöht.

In einer Ausführungsform erfolgen eine Druckerhöhung im Adsorber und eine Bespannung des Adsorbers mit teilgereinigtem Rohprodukt aus einem Druckpuffer. Dabei wird ein geeignetes Ventil (insbesondere das Entspannungsventil) an einem Gasleitungssystems, welches zwischen dem Druckpuffer und Adsorber angeordnet ist, geöffnet, wobei das Abgasventil der Gasableitung geschlossen ist. Nach der Regeneration weist der Druckpuffer einen höheren Druck auf als der Adsorber. Dadurch strömt teilgereinigtes Produktgas, welches beispielsweise im Entspannungstakt in den Druckpuffer geleitet wurde, in den Adsorber.

In einer Ausführungsform umfasst der Arbeitszyklus in der Reihenfolge der Aufzählung einen Druckaufbautakt mit Feedgas, einen Produktionstakt, einen Gleichstrom-Entspannungstakt, einen Regenerationstakt und einen Gegenstrom-Bespannungstakt, wobei vor Beginn eines Taktes der vorherige Takt beendet wird, und wobei insbesondere zwischen zwei Arbeitszyklen, also vor dem Druckaufbautakt und nach dem Gegenstrom-Bespannungstakt, ein Leerlauftakt vorgesehen ist.

In einer Ausführungsform umfasst die Druckwechseladsorptionsanlage wenigstens zwei Adsorber, wobei der Arbeitszyklus vor dem Produktionstakt einen Druckaufbautakt aufweist. Dabei erfolgt der Druckaufbau in einem ersten Adsorber durch Einleiten des Feedgases (erstes Feedgasventil geöffnet) in den ersten Adsorber, wobei gleichzeitig in einem zweiten Adsorber ein Regenerationstakt ausgeführt wird (zweites Abgasventil geöffnet). Die Regenerierung kann durch ein Entspannen im Gegenstrom zur Atmosphäre erfolgen. Alternativ oder zusätzlich kann ein Spülgasstrom verwendet werden. Weiterhin kann die Regenerierung auch mittels einer Evakuierung erfolgen. Selbstverständlich ist eine zusätzliche Evakuierung im Anschluss an die eben beschriebenen Alternativen ebenfalls möglich.

In einer Ausführungsform weist der Arbeitszyklus einen Produktionstakt auf, in dem Produktgas aus einem ersten Adsorber in den Produktpuffer geleitet wird (erstes Produktventil geöffnet), wobei gleichzeitig in einem zweiten Adsorber ein Regenerationstakt ausgeführt wird (zweites Abgasventil geöffnet). Hinsichtlich des Ablaufs der Regenerierung wird auf die vorherigen Absätze verwiesen. Dabei wird der Produktionstakt im ersten Adsorber beendet, wenn die aus dem ersten Adsorber während des Produktionstaktes entnommene Menge $M_A(t)$ des Produktgases größer oder gleich einer vorgegebenen Menge $M_{Design}$ ist. Hinsichtlich der Bestimmung der entnommenen Menge $M_A(t)$ wird auf die vorangegangenen Absätze verwiesen.

Alternativ kann der Produktionstakt im ersten Adsorber auch beendet werden, wenn die Beladungsfront der wenigstens einen abzutrennenden Komponente in dem ersten Adsorber eine Endlage erreicht. Die Detektion des Erreichens der Endlage erfolgt durch Messung einer zeitlichen Veränderung physikalischer Parameter, insbesondere durch Messung einer Druckdifferenz.

Weiterhin ist es auch möglich, dass der Produktionstakt im ersten Adsorber noch für einen bestimmten Zeitraum fortgesetzt wird, nachdem die Beladungsfront die Position des detektierenden Messgeräts erreicht hat.

Der Regenerationstakt kann mit der Beendigung des Produktionstaktes beendet werden oder alternativ noch für einen gewissen Zeitraum weiter ausgeführt werden. Beispielsweise wird der Regenerationstakt ausgeführt bis ein bestimmter Regenerierdruck erreicht ist (insbesondere bei VPSA-Anlagen), der zweite Adsorber mit einer vorgegebenen Spülgasmenge beaufschlagt wurde oder eine vorgegebene Mindestregenerierzeit erreicht ist.

In einer Ausführungsform weist der Arbeitszyklus nach dem Produktionstakt einen Gleichstrom - Entspannungstakt auf. Dabei erfolgt die Entspannung des Adsorbers mittels eines Druckausgleiches mit einem zweiten Adsorber (siehe die vorherigen Erläuterungen).

In einer Ausführungsform umfasst der Arbeitszyklus in der Reihenfolge der Aufzählung

- einen Gleichstrom - Druckaufbautakt mit Feedgas in einem ersten Adsorber, wobei gleichzeitig in einem zweiten Adsorber ein Regenerationstakt ausgeführt wird,
- einen Produktionstakt in dem ersten Adsorber, wobei gleichzeitig in dem zweiten Adsorber ein Regenerationstakt ausgeführt wird,
- einen Gleichstrom - Entspannungstakt in dem ersten Adsorber und einen gleichzeitigen Gegenstrom- Druckaufbautakt in dem zweiten Adsorber, wobei Entspannung und Druckaufbau durch einen Druckausgleich zwischen dem ersten Adsorber (Druck sinkt) und zweiten Adsorber (Druck steigt) erfolgen,
- einen Regenerationstakt in dem ersten Adsorber, wobei gleichzeitig in einem zweiten Adsorber ein Gleichstrom - Druckaufbautakt mit Feedgas ausgeführt wird,

- einen Regenerationstakt in dem ersten Adsorber, wobei gleichzeitig in einem zweiten Adsorber ein Produktionstakt ausgeführt wird,
- einen Gegenstrom - Druckaufbautakt in dem ersten Adsorber und einen gleichzeitigen Gleichstrom-Entspannungstakt in dem zweiten Adsorber, wobei Entspannung und Druckaufbau durch einen Druckausgleich zwischen dem ersten Adsorber (Druck steigt) und zweiten Adsorber (Druck sinkt) erfolgen,
- einen Leerlauftakt, insbesondere zwischen zwei Arbeitszyklen, also vor dem Druckaufbautakt des ersten Adsorbers und dem Entspannungstakt des zweiten Adsorbers.

Das erfindungsgemäße Verfahren ermöglicht es, ein Überfahren der Adsorber zu verhindern, ohne dass dazu ein Regelventil notwendig ist. Weil es die dem Adsorber entnommene Menge begrenzt, verhindert es auch, dass während der Startphase, wenn der Produktpuffer noch nicht sein normales Druckniveau erreicht hat, Verunreinigungen in den Puffer gelangen. Weiterhin wird ermöglicht, dass dem Puffer ohne Verschlechterung der Reinheit des Produkts auch eine Produktmenge oberhalb der Designmenge entnommen werden kann und somit kurzzeitige Bedarfsspitzen besser abgedeckt werden. Regelungs- oder Messvorrichtungen der Produktgasmenge zwischen Adsorber und Produktpuffer sind dafür erfindungsgemäß nicht notwendig. Die Feedgas-Zufuhr wird während des Produktionstaktes erfindungsgemäß nicht unterbrochen.

Beispielsweise sei die Designmenge auf einen Wert von 1000 festgelegt und die abgenommene Menge schwanke sekündlich zwischen 900 und 1100 (wobei der Mittelwert von 1000 eingehalten wird). Ein Regelventil nach dem Puffer würde somit ständig ansprechen und damit letztlich verhindern, dass tatsächlich im Mittel 1000 geliefert werden. Wird dagegen erfindungsgemäß die Menge in den Puffer berücksichtigt, dann spielen derartige Schwankungen keine Rolle, so dass der Produktionstakt tatsächlich erst nach Erreichen der Designmenge beendet wird, die Menge zum Verbraucher zu keinem Zeitpunkt begrenzt ist und der Druck im Puffer auch stabil bleibt (solange der Verbraucher im Mittel nur 1000 abnimmt).

Insbesondere ermöglicht das erfindungsgemäße Verfahren bei einer Verwendung von mehreren Adsorbern eine gleichmäßige Nutzung aller Adsorber. Eventuelle Kapazitätsunterschiede zwischen den Adsorbern können durch separate Sollwerte berücksichtigt werden.

Das erfindungsgemäße Verfahren eignet sich ebenfalls für Druckwechseladsorptionsanlagen, welche mehr als zwei Adsorber aufweisen. Ein weiterer Aspekt der Erfindung ist eine Druckwechseladsorptionsanlage gemäß den Merkmalen des Anspruchs 11 oder 12, die insbesondere geeignet ist das Verfahren gemäß den Merkmalen der Ansprüche 1 bis 10 durchzuführen.

In einer Ausführungsform umfasst die Druckwechseladsorptionsanlage wenigstens einen Adsorber zur Abtrennung einer stärker adsorbierenden Komponente aus einem Rohprodukt, wobei der Adsorber eine mittels eines Feedgasventils verschließbare Feedgaseinleitung und eine mittels eines Produktventils verschließbare Produktgasableitung aufweist. Weiterhin umfasst die Druckwechseladsorptionsanlage einen Produktpuffer zur Aufnahme von gereinigtem Produktgas aus dem Adsorber über die Produktgasableitung, eine Mengenmesseinrichtung zur Bestimmung der dem Produktpuffer entnommene Menge und eine Druckmesseinrichtung zur Bestimmung des Drucks im Produktpuffer. Dabei weist die Druckwechseladsorptionsanlage ein Steuer-und Regelungseinrichtung auf, die geeignet ist, die Messwerte der Druckmesseinrichtung und der Mengenmesseinrichtung aufzunehmen, zu verarbeiten und auf Basis dieser Werte eine Zeitpunkt zur Beendigung der Feedgaseinleitung und der Produktgasableitung zu ermitteln, wobei die Steuer-und Regelungseinrichtung ausgebildet ist, bei Vorliegen dieses Zeitpunkts einen Steuerimpuls an das Feedgasventil und das Produktventil zu senden. In der erfindungsgemäßen Ausgestaltung erfolgt ein Produktionstakt bei einer geöffneten Feedgaseinleitung und Produktgasableitung, so dass bei Verschluss der Feedgaseinleitung und der Produktgasableitung der Produktionstakt beendet wird.

Die Steuer- und Regelungseinrichtung ermittelt die aus dem wenigstens einen Adsorber während des Produktionstaktes entnommene Menge $M_A(t)$ des Produktgases. Die Ermittlung erfolgt mittels der dem Produktpuffer entnommenen Menge $Q(t)$, welche durch die Mengenmesseinrichtung ermittelt wird, und dem Druckverlauf im Produktpuffer, welche mittels der Druckmesseinrichtung ermittelt wird. Dabei kann die Menge $M_A(t)$ insbesondere gemäß der folgenden Formel

$$M_A(t) = \int_0^t Q(t')dt' + M_p(0)\left\{\left(\frac{p(t)}{p(0)}\right)^{\frac{1}{k}} - 1\right\}$$

berechnet werden. Die Steuer-und Regelungseinrichtung sendet ein Impulssignal an das Feedgasventil und das Produktventil wenn $M_A(t)$ größer oder gleich einer vorgegebenen Menge $M_{Design}$ ist. Das Feedgasventil und das Produktventil werden daraufhin geschlossen und somit der Produktionstakt beendet.

In einer anderen Ausführungsform umfasst die Druckwechseladsorptionsanlage, wenigstens einen Adsorber zur Abtrennung einer stärker adsorbierenden Komponente aus einem Rohprodukt, wobei der Adsorber eine mittels eines Feedgasventils verschließbare Feedgaseinleitung und eine mittels eines Produktventils verschließbare Produktgasableitung aufweist. Dabei weist die Druckwechseladsorptionsanlage in dem Adsorber in einer vorgegebenen Lage eine Messvorrichtung zur Messung einer zeitlichen Veränderung von physikalischen Parametern auf.

In einer Ausführungsform ist die vorgegebene Lage (die Position der Messvorrichtung) in dem Adsorber vor der Produktaustrittsseite der Schüttung angeordnet. Der Abstand zwischen der vorgegebene Lage (Position der Messeinrichtung) und der Produktaustrittsseite der Schüttung in dem Adsorber beträgt 5 % bis 50 %, insbesondere 10 % bis 30 %, bezogen auf die Gesamtschütthöhe in dem Adsorber (siehe obigen Erläuterungen). Dabei ist insbesondere die Produktgasableitung auf der der Feedgaseinleitung gegenüberliegenden Seite an dem Adsorber angeordnet. Der Adsorber weist somit ein erstes Ende, beispielsweise ein unteres Ende, in welches Feedgas eingeleitet wird, und ein gegenüberliegendes Ende, beispielsweise ein oberes Ende, aus welchem Produktgas abgeleitet wird, auf. Alternativ kann die Feedgaseinleitung auch seitlich nahe dem ersten Ende und/oder die Produktgasableitung seitlich nahe dem gegenüberliegenden Ende angeordnet sein.

In einer Ausführungsform erfolgt in der vorgegebenen Lage (Position der Messeinrichtung) eine Messung der Änderung des Drucks über eine Entfernung von 5 -25 cm, bevorzugt 5 - 10cm.

Die innerhalb des Adsorbers angeordnete Messvorrichtung ermöglicht eine Detektion des Erreichens der vorgegebenen Lage durch die Beladungsfront, wodurch der Zeitpunkt des Beendens des Produktionstaktes bestimmt werden kann. Je nach Lage der Messvorrichtung kann der Produktionstakt bei Erreichen der vorgegebene Lage durch die Beladungsfront unmittelbar (Endlage) oder zu einem vordefinierten, späteren Zeitpunkt beendet werden. Zur Vermeidung von Wiederholungen wird auf die obigen Ausführungen verwiesen.

Es ist festzustellen, dass die Druckwechseladsorptionsanlage insbesondere einen Produktpuffer, einen Druckpuffer, einen Feedgasverdichter, eine Vakuumapparatur, weitere parallelgeschaltete Adsorber aufweisen kann, die alle, je nach Bedarf, mit jeweils einem Gasleitungssystem miteinander verbunden sein können, wobei jedes Gasleitungssystem über wenigstens ein Ventil verfügen kann. Derartige Ausgestaltungen sind dem Fachmann geläufig. Insbesondere weist die Druckwechseladsorptionsanlage die oben hinsichtlich des Verfahrens beschriebenen Komponenten und die in der Figurenbeschreibung erläuterten Komponenten auf.

Die Messvorrichtung ermöglicht die abgenommene Produktmenge zu begrenzen, ohne dass dafür ein Regelventil vor oder nach einem Produktpuffer nötig wäre, ein Überfahren der Anlage sicher zu verhindern und eine Verunreinigung des Produktpuffers während instationärer Phasen zu vermeiden.

Weitere Einzelheiten und Vorteile der Erfindung sollen durch die nachfolgenden Figurenbeschreibungen von Ausführungsbeispielen anhand der Figuren erläutert werden.

Es zeigen:

Fig. 1    beschreibt die Verwendung des erfindungsgemäßen Verfahrens in einer Ein-Adsorber-Anlage, und

Fig. 2    beschreibt die Verwendung des erfindungsgemäßen Verfahrens in einer Zwei-Adsorber-Anlage.

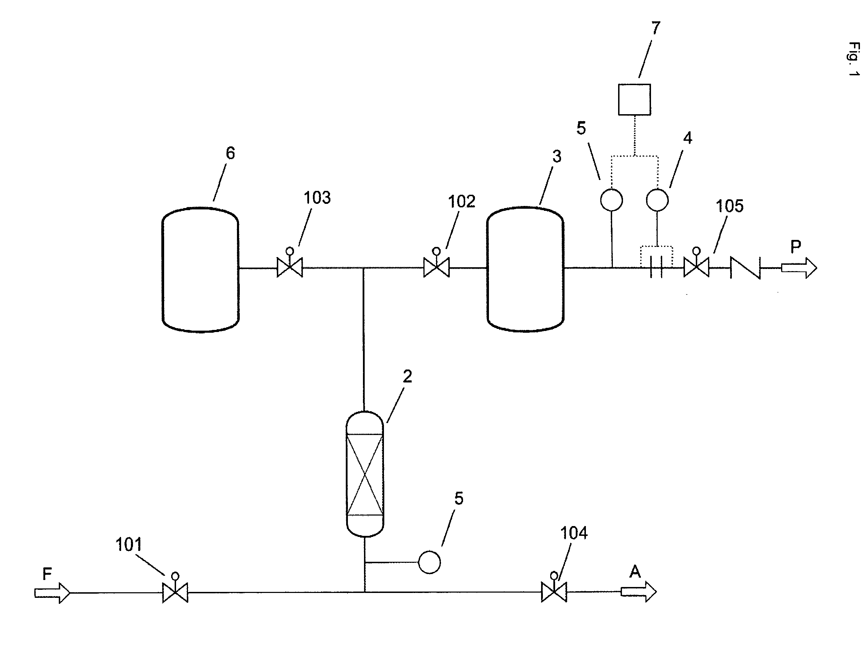

Die Figur 1 zeigt eine schematische Abbildung einer Ein-Adsorber-Anlage, welche geeignet ist, das erfindungsgemäße Verfahren durchzuführen.

Die Druckwechseladsorptionsanlage 1 umfasst einen Adsorber 2, einen Produktpuffer 3, einen Druckpuffer 6, eine Mengenmesseinrichtung 4, zwei Druckmesseinrichtungen 5, ein Feedgasventil 101, ein Produktventil 102, ein Entspannungsventil 103, ein Abgasventil 104 und ein Entnahmeventil 105.

Die Mengenmesseinrichtung 4 ermöglicht die Bestimmung der aus dem Produktpuffer 3 entnommenen Menge an Produktgas P. Die Druckmesseinrichtungen 5 ermöglichen eine Bestimmung des Drucks in dem Adsorber 2 beziehungsweise in dem Produktpuffer 3.

Das Verfahren weist vorliegend einen Arbeitszyklus auf, der einen Druckaufbautakt, einen Produktionstakt, einen Entspannungstakt, einen Regenerationstakt und einen Bespannungstakt umfasst, wobei zwischen zwei Arbeitszyklen, also vordem Druckaufbautakt und nach dem Bespannungstakt, ein Leerlauftakt vorgesehen ist. Das Verfahren lässt sich somit in sechs Schritte unterteilen.

In einem ersten Schritt liegt ein Leerlauftakt vor. Die Ventile 101 bis 104 sind geschlossen, das Entnahmeventil 105, welches nach dem Produktpuffer angeordnet ist, ist offen. Über das Entnahmeventil 105 ist es möglich, dass ein Verbraucher (über eine hier aus Gründen der Übersichtlichkeit nicht dargestellte Abnahmevorrichtung) Produktgas P aus dem Produktpuffer 3 entnehmen kann. Das Entnahmeventil 105 ist vorliegend während des Leerlauftaktes und des Arbeitszyklus geöffnet.

Die Zeitdauer des Leerlauftaktes wird durch die abgenommene Menge bestimmt. Beispielsweise wird er Leerlauftakt beendet bevor ein bestimmter Minimaldruck im Produktpuffer 3 unterschritten wird. Es erfolgt ein so rechtzeitiger Übergang in den Arbeitszyklus, dass der Produktpuffer 3 vor Unterschreiten dieses Drucks wieder mit neuem Produkt gefüllt wird. Alternativ kann die Zeitdauer des Leerlauftaktes auch aus der aktuell abgenommenen Menge im Vergleich zu einer angenommenen Designmenge der Anlage bestimmt werden. Bei einer geringeren Entnahme von Produktgas P wird ein erneuter Arbeitszyklus solange ausgesetzt bis eine vorgegebene Menge an Produktgas aus dem Produktpuffer entnommen wurde, so dass anschließend der Beginn eines neuen Arbeitszyklus einsetzt und neues Produktgas P in den Produktpuffer 3 geleitet wird. Bei 100% Last ist die Länge dieses Taktes praktisch Null und nach Beendigung eines Arbeitszyklus folgt direkt ein weiterer Arbeitszyklus.

In einem zweiten Schritt umfasst der Arbeitszyklus einen Druckaufbautakt. Dabei erfolgt der Druckaufbau in dem Adsorber 2 mittels eines Einleitens von Feedgas F über das nun geöffnete Feedgasventil 101 in den Adsorber 2 (Druckaufbau im Gleichstrom).

Die Ventile 102 bis 104 sind weiterhin geschlossen. Der Druckaufbau wird beendet, wenn der Druck im Adsorber 2 größer oder gleich dem Druck im Produktpuffer 2 ist. Es erfolgt dann ein Übergang in den Produktionstakt (Schritt 3).

In einem dritten Schritt befindet sich die Anlage in einem Produktionstakt. Der zweite Schritt (Druckaufbautakt) wird durch ein Öffnen des Produktventils 102, welches eine Zuführung von Produktgas aus dem Adsorber 2 in den Produktpuffer 3 ermöglicht, beendet und der Produktionstakt begonnen. Das Feedgasventil 101 und das Produktventil 102 sind somit während des Produktionstaktes geöffnet. Die Ventile 103 und 104 sind geschlossen. Im Produktionstakt fließt somit Feedgas F über das Feedgasventil 101 in den Adsorber 2 und Produktgas P über das Produktventil 102 in den Produktpuffer 3.

Der Produktionstakt wird so lange ausgeführt, bis die Rückhaltekapazität des Adsorbers 2 für die abzutrennende Komponente oder die abzutrennenden Komponenten erschöpft ist. Es erfolgt eine Beendigung des Produktionstaktes wenn die aus dem wenigstens einen Adsorber während des Produktionstaktes entnommene Menge $M_A(t)$ des Produktgases größer oder gleich einer vorgegebenen Menge $M_{Design}$ ist, wobei die Menge $M_A(t)$ aus der dem Produktpuffer entnommenen Menge Q(t) und dem Druckverlauf im Produktpuffer berechnet wird. Dabei wird die Menge $M_A(t)$ gemäß der folgenden Formel

$$M_A(t) = \int_0^t Q(t')dt' + M_p(0)\left\{\left(\frac{p(t)}{p(0)}\right)^{\frac{1}{k}} - 1\right\}$$

berechnet. Hinsichtlich der Bedeutung der einzelnen Abkürzungen wird auf die Beschreibung verwiesen.

Die Auswertung der über die Mengenmesseinrichtung und Druckmesseinrichtung ermittelten Daten erfolgt über eine mit diesen verbundene Steuer-und Regelungseinrichtung (8), welche ein Impulssignal an das Feedgasventil und das Produktventil sendet, wenn $M_A(t)$ größer oder gleich einer vorgegebenen Menge $M_{Design}$ ist. Das Feedgasventil und das Produktventil werden daraufhin geschlossen und somit der Produktionstakt beendet.

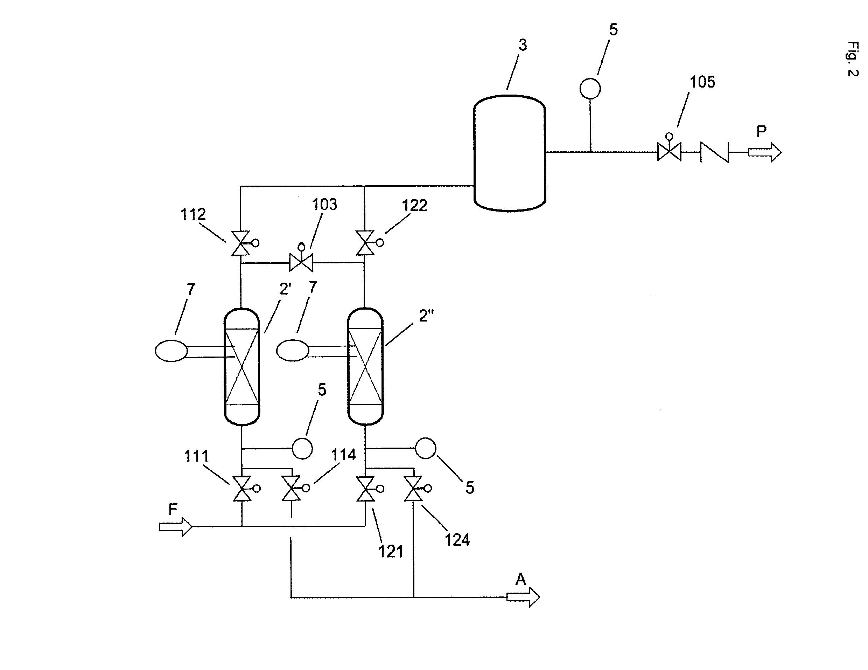

Alternativ kann eine Beendigung des Produktionstaktes auch erfolgen, wenn das Erreichen einer vorgegebene Endlage (Position der Messeinrichtung entspricht der vorgegebenen Endlage) oder einer vorgegebenen Lage (Position der Messeinrichtung) durch die Beladungsfront in dem wenigstens einen Adsorber 2 detektiert wird, wobei bei der Detektion in der vorgegebenen Lage der Produktionstakt noch für einen bestimmten Zeitpunkt weiter ausgeführt wird. Es wird auf die vorangegangenen Erläuterungen und die Erläuterungen zu Figur 2 verwiesen.

Der Produktionstakt wird durch Schließen des Feedgasventils 101 und des Produktventils 102 beendet.

Nach Beendigung des Produktionstaktes wird in einem vierten Schritt ein Gleichstrom - Entspannungstakt ausgeführt. Das Entspannungsventil 103 ist geöffnet. Das Feedgasventil 101, das Produktgasventil 102 und das Abgasventil 104 sind geschlossen. Dabei erfolgt eine Entspannung des Adsorbers 2 mittels eines Druckausgleiches mit einem Druckpuffer 6, der über das Entspannungsventil 103 mit dem Adsorber 2 verbunden ist. Der Druckpuffer 6 weist vor der Entspannung einen niedrigeren Druck als der Adsorber 2 auf. Durch die Entspannung gelangt teilgereinigtes (bzw. nahezu reines) Rohprodukt in den Druckpuffer 6. Nach Erreichen eines vorgegebenen Drucks oder einer vorgegeben Zeit wird der Entspannungstakt durch Schließen des Entspannungsventils 103 beendet.

Nach Beenden des Entspannungstakts wird in einem fünften Schritt ein Regenerationstakt ausgeführt. Das Feedgasventil 101, das Produktgasventil 102 und das Entspannungsventil 103 sind geschlossen. Das Abgasventil 104 ist geöffnet. Dabei erfolgt die Regeneration des Adsorbers 2 mittels eines Entspannens im Gegenstrom zur Atmosphäre, so dass mit der abzutrennenden Komponente angereichertes Abgas A aus dem Adsorber 2 geleitet wird. Alternativ kann die Regenerierung durch einen Spülgasstrom unterstützt werden. Der Spülgasstrom kann beispielsweise durch eine gedrosselte Öffnung des Produktventils 102 und/oder des Entspannungsventils 103 bereitgestellt werden. Alternativ ist auch eine Einleitung von Spülgas aus einem Spülgasreservoir möglich. In einem VSPA-Verfahren umfasst dieser Schritt auch die Evakuierung mit Vakuum. Nach Erreichen eines vorgegebenen Drucks oder einer vorgegeben Zeit wird der Regenerationstakt durch Schließen des Abgasventils 104 (und ggf. der Ventile des Spülgasstroms oder der Vakuumeinrichtung) beendet.

Im Anschluss an den Regenerationstakt wird in einem sechsten Schritt ein Gegenstrom - Bespannungstakt ausgeführt. Eine Bespannung erfolgt im vorliegenden Fall über den Druckpuffer 6, der einen höheren Druck als der Adsorber 2 aufweist. Das Entspannungsventil 103 ist geöffnet. Das Feedgasventil 101, das Produktgasventil 102 und das Abgasventil 104 sind geschlossen. Dadurch erfolgt eine Druckerhöhung im Adsorber 2 und eine Bespannung des Adsorbers 2 mit teilgereinigtem Rohprodukt aus dem Druckpuffer 6. Nach Erreichen eines vorgegebenen Drucks oder einer vorgegeben Zeit wird der Bespannungstakt beendet. Die Anlage geht über in den Leerlauftakt (Schritt 1). Das Verfahren beginnt somit erneut.

Die einzelnen Schritte werden in der folgenden Tabelle 1 zusammengefasst.

Tabelle 1: X steht für ein geschlossenes Ventil und O für ein geöffnetes Ventil, $P_A$ für den Druck im Adsorber, $P_P$ für den Druck im Produktpuffer.

| Schritt | Takt | 101 | 102 | 103 | 104 | 105 | Beendigung |
|---|---|---|---|---|---|---|---|
| 1 | Leerlauf | X | X | X | X | O | je nach Lastfall |
| 2 | Druckaufbau | O | X | X | X | O | $P_A \geq P_P$ |
| 3 | Produktion | O | O | X | X | O | $M_A(t) \geq M_{Design}$ |
| 4 | Entspannung | X | X | O | X | O | Zeit- oder Druckkontrolliert |
| 5 | Regenerierung | X | X | X | O | O | Siehe 4 |
| 6 | Bespannung | X | X | O | X | O | Siehe 4 |

Die Figur 2 zeigt eine schematische Abbildung einer Zwei-Adsorber-Anlage, welche geeignet ist, das erfindungsgemäße Verfahren durchzuführen. Hinsichtlich Vorrichtungen und Verfahrensschritte mit einer gleichen Bezeichnung oder Bezugszeichen wird auf die Erläuterungen der Figur 1 verwiesen.

Die Druckwechseladsorptionsanlage 1 der Figur 2 umfasst einen ersten Adsorber 2', einen zweiten Adsorber 2", einen Produktpuffer 3, drei Druckmesseinrichtungen 5, zwei Feedgasventile 111, 121, zwei Produktventile 112, 122, ein Entspannungsventil 103, zwei Abgasventile 114, 124 und ein Entnahmeventil 105. Eine zusätzliche Mengenmessung ist möglich (analog Figur 1).

Das Verfahren weist vorliegend einen Arbeitszyklus auf, der folgende Schritte umfasst:

- einen Gleichstrom - Druckaufbautakt in einem ersten Adsorber 2', wobei gleichzeitig in einem zweiten Adsorber 2" ein Regenerationstakt ausgeführt wird,
- einen Produktionstakt in dem ersten Adsorber 2', wobei gleichzeitig in dem zweiten Adsorber 2" ein Regenerationstakt ausgeführt wird,
- einen Gleichstrom - Entspannungstakt in dem ersten Adsorber 2' und einen gleichzeitigen Gegenstrom - Druckaufbautakt in dem zweiten Adsorber 2", wobei Entspannung und Druckaufbau durch einen Druckausgleich zwischen dem ersten Adsorber 2' (Druck sinkt) und zweiten Adsorber 2" (Druck steigt) erfolgt,
- einen Regenerationstakt in dem ersten Adsorber 2', wobei gleichzeitig in einem zweiten Adsorber 2" ein Gleichstrom-Druckaufbautakt ausgeführt wird,
- einen Regenerationstakt in dem ersten Adsorber 2', wobei gleichzeitig in einem zweiten Adsorber 2" ein Produktionstakt ausgeführt wird,
- einen Gegenstrom - Druckaufbautakt in dem ersten Adsorber 2' und einen gleichzeitigen Gleichstrom - Entspannungstakt in dem zweiten Adsorber 2", wobei Entspannung und Druckaufbau durch einen Druckausgleich zwischen dem ersten Adsorber 2' (Druck steigt) und zweiten Adsorber 2" (Druck sinkt) erfolgt,

wobei insbesondere zwischen zwei Arbeitszyklen, also vor dem Druckaufbautakt des ersten Adsorbers 2' und dem Entspannungstakt des zweiten Adsorbers 2", ein Leerlauftakt vorgesehen ist.

In einem ersten Schritt liegt ein Leerlauftakt vor. Die Ventile 111, 112, 114, 121, 122, 124 und 103 sind geschlossen, das Entnahmeventil 105 ist vorliegend geöffnet. Die Zeitdauer des Leerlauftaktes wird durch die abgenommene Menge bestimmt. Es wird auf die Ausführungen zu Figur 1 verwiesen.

Nach Beendigung des Leerlauftaktes erfolgt ein Übergang in den Arbeitszyklus. In einem zweiten Schritt erfolgt ein Druckaufbautakt in dem ersten Adsorber 2', wobei gleichzeitig in dem zweiten Adsorber 2" ein Regenerationstakt ausgeführt wird. Dabei erfolgt der Druckaufbau in dem ersten Adsorber 2' mittels Einleiten von Feedgas F über das nun geöffnete erste Feedgasventil 111 in den ersten Adsorber 2' Druckaufbau im Gleichstrom). Der zweite Adsorber 2" wird im Gegenstrom zur Atmosphäre über das geöffnete zweite Abgasventil 124 entspannt, Abgas A abgeleitet und somit regeneriert.

Die Ventile 121, 122 und 114 sind weiterhin geschlossen. Die Regeneration des zweiten Adsorbers 2" kann durch einen Spülgasstrom aus dem ersten Adsorber 2' unterstützt werden (103 gedrosselt geöffnet). Der Druckaufbau wird beendet, wenn der Druck im ersten Adsorber 2' größer oder gleich dem Druck im Produktpuffer 3 ist. Es erfolgt dann ein Übergang in den Produktionstakt (Schritt 3).

In einem dritten Schritt befindet sich die Anlage in einem Produktionstakt. Das Feedgasventil 111 und das Produktventil 112 des ersten Adsorbers 2' sind geöffnet, die Ventile 121, 122 und 114 geschlossen. Es fließt Feedgas F über das Feedgasventil 111 in den ersten Adsorber 2' und Produktgas P über das Produktgasventil 112 in den Produktpuffer 3. Die Regeneration des zweiten Adsorbers 2" erfolgt weiterhin über das Abgasventil 124 und kann durch eine gedrosselte Öffnung des Entspannungsventils 103 mit einem Spülgasstrom unterstützt werden.

Der Produktionstakt wird so lange ausgeführt, bis die Rückhaltekapazität des ersten Adsorbers 2' erschöpft ist. Eine Beendigung des Produktionstaktes erfolgt, wenn das Erreichen einer entlang der Strömungsrichtung des Feedgases vorgegebenen Endlage (Endlage entspricht der Position der Messeinrichtung) durch die Beladungsfront in dem ersten Adsorber 2' detektiert wird. Alternativ ist es möglich, dass das Erreichen einer vorgegebenen Lage (Position der Messeinrichtung) durch die Beladungsfront detektiert wird und der Produktionstakt des ersten Adsorbers 2' und der Regenerationstakt des zweiten Adsorbers 2" für einen bestimmten Zeitpunkt weiter ausgeführt wird (Schritt 4a).

Die Auswertung der über die Messeinrichtung ermittelten Daten kann über eine mit damit verbundene Steuer- und Regelungseinrichtung (hier nicht dargestellt) erfolgen, welche ein Impulssignal an das entsprechende Feedgasventil (111, 121) und das entsprechende Produktventil (112, 122) sendet, wenn eine Endlage detektiert wurde. Alternativ kann die Steuer-und Regelungseinrichtung ein Impulssignal senden, wenn eine vorgegebene Lage detektiert wurde und ein vordefinierter Zeitraum verstrichen ist. Es wird auf die vorherigen Erläuterungen verwiesen (siehe vorheriger Abschnitt).

Eine Beendigung des Produktionstaktes ist auch denkbar, wenn die aus dem ersten Adsorber 2' während des Produktionstaktes entnommene Menge $M_A(t)$ des Produktgases P größer oder gleich einer vorgegebenen Menge $M_{Design}$ ist. Hinsichtlich einer Bestimmung von $M_A(t)$ wird auf die vorangegangenen Erläuterungen verwiesen.

Der Regenerationstakt kann auch nach Beenden des Produktionstaktes im ersten Adsorber 2' noch weiter ausgeführt werden (Schritt 4b). Der Regernationstakt kann beispielsweise ausgeführt werden, bis ein bestimmter Regenerierdruck im zweiten Adsorber 2"erreicht wird, der zweite Adsorber 2" mit einer vorgegebenen Spülgasmenge beaufschlagt wurde oder eine vorgegebene Mindestregenerierzeit erreicht wird.

Nach Beendigung des Produktionstaktes wird in einem fünften Schritt ein Gleichstrom-Entspannungstakt im ersten Adsorber 2' und ein Gegenstrom-Bespannungstakt im zweiten Adsorber 2" ausgeführt. Das Entspannungsventil 103 ist geöffnet. Die weiteren Ventile (außer Entnahmeventil 105) sind geschlossen. Dabei erfolgt eine Entspannung des ersten Adsorbers 2' mittels eines Druckausgleiches mit dem zweiten Adsorber 2", der über das Entspannungsventil 103 mit dem ersten Adsorber 2' verbunden ist. Nach Erreichen eines vorgegebenen Drucks oder einer vorgegeben Zeit wird der Entspannungstakt im ersten Adsorber 2' und der Bespannungstakt im zweiten Adsorber 2" beendet.

Im sechsten Schritt liegt wieder ein Leerlauftakt vor. Die Ventile 111, 112, 114, 121, 122, 124 und 103 sind geschlossen, das Entnahmeventil 105 ist vorliegend geöffnet. Die Zeitdauer des Leerlauftaktes wird durch die abgenommene Menge bestimmt. Es wird auf die Ausführungen zu Figur 1 verwiesen.

Anschließend erfolgt in einem siebten Schritt ein Druckaufbautakt in dem zweiten Adsorber 2", wobei gleichzeitig in dem erste Adsorber 2' ein Regenerationstakt ausgeführt wird. Vorliegend ist das Feedgasventil 121 zum zweiten Adsorber 2" und das erste Abgasventil 114 des ersten Adsorbers 2' geöffnet. Zur Unterstützung der Regenerierung des ersten Adsorbers 2' kann ein Spülgasstrom aus dem zweiten Adsorber 2" über das Entspannungsventil 103 (gedrosselt geöffnet) in den ersten Adsorber geleitet werden (analog Schritt 2).

In einem achten Schritt befindet sich die Anlage in einem Produktionstakt. Das Feedgasventil 121 und das Produktventil 122 des zweiten Adsorbers 2" sind, vergleichbar dem Schritt 3, geöffnet. Die Ventile 111, 112 und 124 sind geschlossen. Die Regeneration des ersten Adsorbers 2' erfolgt weiterhin über das Abgasventil 114 und kann durch eine gedrosselte Öffnung des Entspannungsventils 103 mit einem Spülgasstrom unterstützt werden.

Dieser Produktionstakt wird so lange ausgeführt, bis die Rückhaltekapazität des zweiten Adsorbers 2"erschöpft ist. Es wird hinsichtlich der Feststellung des Zeitpunkts der Beendigung auf die obigen Ausführungen und die Ausführungen der Figur 1 verwiesen.

Alternativ kann ein dem Schritt 4a analoger Schritt 9a ausgeführt werden, so dass nach der Detektion der Beladungsfront der Produktionstakt noch einen vordefinierten Zeitraum weiter ausgeführt wird. Der Regenerationstakt des ersten Adsorber 2' kann, vergleichbar dem Schritt 4b, auch nach Beenden des Produktionstaktes im zweiten Adsorber 2" noch weiter ausgeführt werden (Schritt 9b). Es wird auf die Ausführungen hinsichtlich der Schritte 4a und 4b verwiesen.

Anschließend wird in einem zehnten Schritt ein Gleichstrom-Entspannungstakt im zweiten Adsorber 2" und ein Gegenstrom-Bespannungstakt im ersten Adsorber 2' ausgeführt. Das Entspannungsventil 103 ist geöffnet. Die weiteren Ventile (außer Entnahmeventil 105) sind geschlossen. Dabei erfolgt eine Entspannung des zweiten Adsorbers 2" mittels eines Druckausgleiches mit dem ersten Adsorber 2' (vergleichbar dem Schritt 5). Nach Erreichen eines vorgegebenen Drucks oder einer vorgegeben Zeit wird der Entspannungstakt im ersten Adsorber 2' und der Bespannungstakt im zweiten Adsorber 2" beendet.

Die Anlage geht anschließend in den Leerlauftakt (Schritt 1) über. Das Verfahren beginnt somit erneut.

Die einzelnen Schritte werden in der folgenden Tabelle 2 zusammengefasst.

Tabelle 1: X steht für ein geschlossenes Ventil, O für ein geöffnetes Ventil, (O) für ein gedrosselt geöffnetes Ventil (optional), $P_A$ für den Druck in dem jeweiligen Adsorber, $P_P$ für den Druck im Produktpuffer, $\Delta p_M$ für den durch die Messvorrichtung 7 zur Detektion der Beladungsfront detektierte Druckunterschied, $Ap_{set}$ für eine vorgegebenen Wert hinsichtlich des Druckunterschieds und Ad. Für einen Adsorber.

|   | Takt | 111 | 121 | 112 | 122 | 103 | 114 | 124 | 105 | Beendigung |
|---|------|-----|-----|-----|-----|-----|-----|-----|-----|------------|
| 1 | Leerlauf | X | X | X | X | X | X | X | O | je nach Lastfall |
| 2 | Druckaufbau 2' Regenerierung 2" | O | X | X | zu | (O) | X | O | O | $P_A$ (Ad. 2')≥ $P_P$ |
| 3 | Produktion 2' Regenerierung 2" | O | X | O | X | (O) | X | O | O | $\Delta p_M$(Ad. 2') ≥ $\Delta p_{set}$ |
| 4a | Produktion 2' Regenerierung 2" | O | X | O | X | (O) | X | O | O | Zeit- oder Druckkontrolliert |
| 4b | Regenerierung 2" | X | X | X | X | (O) | X | O | O | Siehe 4a |
| 5 | Entspannung 2' Bespannung 2" | X | X | X | X | O | X | X | O | Siehe 4a |
| 6 | Leerlauf | X | X | X | X | X | X | X | O | je nach Lastfall |
| 7 | Regenerierung 2' Druckaufbau 2" | X | O | X | X | (O) | O | X | O | $P_A$ (Ad. 2") ≥ $P_P$ |
| 8 | Regenerierung 2' Produktion 2" | X | O | X | O | (O) | O | X | O | $Ap_M$(Ad. 2") ≥ $\Delta_{Pset}$ |
| 9a | Regenerierung 2' Produktion 2" | X | O | X | O | (O) | O | X | O | Siehe 4a |
| 9b | Regenerierung 2' | X | X | X | X | (O) | O | X | O | Siehe 4a |
| 10 | Bespannung 2' Entspannung 2" | X | X | X | X | O | X | X | O | Siehe 4a |

**Bezugszeichenliste**

| 1 | Druckwechseladsorptionsanlage |
|---|---|
| 101, 111, 121 | Feedgasventil |
| 102, 112, 122 | Produktventil |
| 103 | Entspannungsventil |
| 104, 114, 124 | Abgasventil |
| 105 | Entnahmeventil |
| 2 | Adsorber |
| 2' | erster Adsorber |
| 2" | zweiter Adsorber |
| 3 | Produktpuffer |
| 4 | Mengenmesseinrichtu ng |
| 5 | Druckmesseinrichtung |
| 6 | Druckpuffer |
| 7 | Messvorrichtung zur Detektion der Belad ungsfront |
| 8 | Steuer-und Regelungseinrichtung |

(fortgesetzt)

| | |
|---|---|
| A | Abgas |
| F | Feedgas |
| P | Produktgas |

**Patentansprüche**

1. Verfahren zur Lastanpassung, Mengen- und Reinheitskontrolle einer Druckwechseladsorptionsanlage (1), wobei die Druckwechseladsorptionsanlage (1) einen Arbeitszyklus durchläuft und der Arbeitszyklus wenigstens einen Produktionstakt umfasst,
**dadurch gekennzeichnet,**
**dass** während des Produktionstaktes eine ununterbrochene Zufuhr eines Feedgases (F) in wenigstens einen Adsorber (2) erfolgt und der Zeitpunkt der Beendigung des Produktionstaktes bestimmt wird durch

   - eine Detektion der Position einer Beladungsfront in dem wenigstens einen Adsorber (2), oder
   - eine Ermittlung der aus dem wenigstens einen Adsorber (2) während des Produktionstaktes entnommene Menge $M_A(t)$ des Produktgases (P), wobei die Beendigung des Produktionstaktes erfolgt, wenn die Menge $M_A(t)$ größer oder gleich einer vorgegebenen Menge $M_{Design}$ ist, und wobei die Menge $M_A(t)$ aus der dem Produktpuffer (3) entnommenen Menge $Q(t)$ und dem Druckverlauf im Produktpuffer (3) berechnet wird.

2. Verfahren zur Lastanpassung, Mengen- und Reinheitskontrolle nach Anspruch 1, **dadurch gekennzeichnet, dass** der Produktionstakt beendet wird, wenn $M_A(t) \geq M_{Design}$ ist, wobei die Menge $M_A(t)$ gemäß der folgenden Formel

$$M_A(t) = \int_0^t Q(t')dt' + M_p(0)\left\{\left(\frac{P(t)}{P(0)}\right)^{\frac{1}{k}} - 1\right\}$$

berechnet wird, wobei

   - t die Zeit seit Beginn des Produktionstaktes in Sekunden ist,
   - $M_A(t)$ die dem Adsorber (2) seit Beginn des Produktionstaktes entnommene Menge in kg ist,
   - $Q(t)$ die aus dem Produktpuffer (3) während des Produktionstaktes entnommenen Menge in kg ist,
   - Mp(0) die Masse im Adsorber (2) zu Beginn des Produktionstaktes ist,

      - wobei Mp(0) gemäß der folgenden Formel

$$M_p(0) = V * \rho(t=0),$$

berechnet wird, wobei
   - V das Volumen des Produktpuffers (3) in $m^3$ ist, und
   - $\rho$ die Dichte des Produktgases im Puffer in $kg/m^3$ bei t = 0 ist,

   - P(t) der Druck im Produktpuffer (3) zur Zeit t in bar ist,
   - P(0) der Druck im Produktpuffer (3) zur Zeit t = 0 in bar ist, und
   - K jede reelle Zahl von 1 bis 1.4 ist.

3. Verfahren zur Lastanpassung, Mengen- und Reinheitskontrolle nach Anspruch 1, **dadurch gekennzeichnet, dass** die Bestimmung der Position der Beladungsfront in dem Adsorber (2) mittels einer Messung der zeitlichen Veränderung von physikalischen Parametern erfolgt, wobei die Messung in einer vorgegebenen Lage innerhalb des Adsorbers (2) durchgeführt wird.

4. Verfahren zur Lastanpassung, Mengen- und Reinheitskontrolle nach Anspruch 3, **dadurch gekennzeichnet, dass** die Bestimmung der Position der Beladungsfront mittels einer Messung des Druckabfalls über eine geringe Distanz, gemessen entlang der Strömungsrichtung des Feedgases (F), erfolgt, wobei das Erreichen der vorgegebenen Lage durch die Beladungsfront durch einen signifikanten Anstieg des Druckabfalls, insbesondere durch einen Anstieg des Druckabfalls von mindestens 10%, charakterisiert ist.

5. Verfahren zur Lastanpassung, Mengen- und Reinheitskontrolle nach einem der vorhergehenden Ansprüche, **dadurch gekennzeichnet, dass** vor dem Produktionstakt ein Druckaufbau in dem Adsorber (2) mittels eines Einleitens des Feedgases (F) in den Adsorber (2) erfolgt.

6. Verfahren zur Lastanpassung, Mengen- und Reinheitskontrolle nach Anspruch 5, **dadurch gekennzeichnet, dass** der Druckaufbau im Adsorber (2) beendet wird und ein Übergang in den Produktionstakt erfolgt, wenn der Druck im Adsorber (2) größer oder gleich dem Druck im Produktpuffer (3) ist.

7. Verfahren zur Lastanpassung, Mengen- und Reinheitskontrolle nach einem der vorhergehenden Ansprüche, **dadurch gekennzeichnet, dass** nach Beendigung des Produktionstaktes eine Entspannung des Adsorbers (2) mittels eines Druckausgleiches erfolgt, wobei insbesondere der Druckausgleich mittels einer Entspannung im Gleichstrom in einen Druckpuffer (6) oder der Druckausgleich in einem ersten Adsorber (2') mittels einer Entspannung in einen zweiten Adsorber (2") erfolgt.

8. Verfahren zur Lastanpassung, Mengen- und Reinheitskontrolle nach Anspruch 7, **dadurch gekennzeichnet, dass** nach Beendigung der Entspannung des Adsorbers (2) eine Regenerierung des Adsorbers (2) mittels

   - eines Entspannens im Gegenstrom zur Atmosphäre und/oder
   - einer Verwendung eines Spülgasstromes und/oder
   - einer Evakuierung erfolgt.

9. Verfahren zur Lastanpassung, Mengen- und Reinheitskontrolle nach Anspruch 8, **dadurch gekennzeichnet, dass** nach Beendigung der Regenerierung der Druck im Adsorbers (2) erhöht und der Adsorber (2) mit Rohprodukt, insbesondere teilgereinigtem Rohprodukt, bespannt wird.

10. Verfahren zur Lastanpassung, Mengen- und Reinheitskontrolle nach Anspruch 9, **dadurch gekennzeichnet, dass** die Bespannung mit teilgereinigtem Rohprodukt aus einem Druckpuffer (6) oder aus einem weiteren Adsorber (2") erfolgt.

11. Druckwechseladsorptionsanlage, insbesondere zur Durchführung eines Verfahrens nach einem der Ansprüche 1 bis 10, umfassend

   - wenigstens einen Adsorber (2) zur Abtrennung einer stärker adsorbierenden Komponente aus einem Rohprodukt, wobei der Adsorber (2) eine mittels eines Feedgasventils (101, 111, 121) verschließbare Feedgaseinleitung und eine mittels eines Produktventils (102, 112, 122) verschließbare Produktgasableitung aufweist,
   - einen Produktpuffer (3) zur Aufnahme von gereinigtem Produktgas (P) aus dem Adsorber (2) über die Produktgasableitung,
   - eine Mengenmesseinrichtung (4) zur Bestimmung der dem Produktpuffer (3) entnommene Menge,
   - eine Druckmesseinrichtung (5) zur Bestimmung des Drucks im Adsorber (2),

   **dadurch gekennzeichnet,**
   **dass** die Druckwechseladsorptionsanlage (1) eine Steuer-und Regelungseinrichtung (8) aufweist, die geeignet ist, die Messwerte der Druckmesseinrichtung (5) und der Mengenmesseinrichtung (4) aufzunehmen, zu verarbeiten und auf Basis dieser Werte eine Zeitpunkt zur Beendigung der Feedgaseinleitung und der Produktgasableitung zu ermitteln, wobei die Steuer-und Regelungseinrichtung (8) ausgebildet ist, bei Vorliegen dieses Zeitpunkts einen Steuerimpuls an das Feedgasventil (101, 111, 121) und das Produktventil (102, 112, 122) zu senden.

12. Druckwechseladsorptionsanlage, insbesondere zur Durchführung eines Verfahrens nach einem der Ansprüche 1 bis 10, umfassend wenigstens einen Adsorber (2) zur Abtrennung einer stärker adsorbierenden Komponente aus einem Rohprodukt, wobei der Adsorber (2) eine mittels eines Feedgasventils (101, 111, 121) verschließbare Feedgaseinleitung und eine mittels eines Produktventils (102, 112, 122) verschließbare Produktgasableitung aufweist, **dadurch gekennzeichnet,** **dass** die Druckwechseladsorptionsanlage in dem Adsorber (2) in einer vorgegebenen Lage eine Messvorrichtung (7) zur Messung der zeitlichen Veränderung von physikalischen Parametern, insbesondere zur Messung des Druckabfalls, aufweist.

13. Druckwechseladsorptionsanlage nach einem der Ansprüche 11 oder 12, **dadurch gekennzeichnet, dass** die Messvorrichtung (7) vor der Produktaustrittsseite der Schüttung, gemessen entlang der Strömungsrichtung des Feedgases, angeordnet ist, wobei der Abstand zu der Produktaustrittsseite der Schüttung 5 % bis 50 %, insbesondere 10 % bis 30 %, bezogen auf Gesamtschütthöhe in dem Adsorber, beträgt.

14. Druckwechseladsorptionsanlage nach einem der Ansprüche 11 bis 13, **dadurch gekennzeichnet, dass** die Druckwechseladsorptionsanlage (1) mehrere parallelgeschaltete Adsorber (2', 2") umfasst.

Fig. 1

Fig. 2

Europäisches
Patentamt

European
Patent Office

Office européen
des brevets

**EUROPÄISCHER RECHERCHENBERICHT**

Nummer der Anmeldung

EP 15 00 0861

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 941 894 A (BLACK JAMES B [US]) 17. Juli 1990 (1990-07-17) <br><br> * Spalte 3, Zeile 27 - Spalte 4, Zeile 32 * <br> * Spalte 6, Zeile 8 - Spalte 6, Zeile 22 * <br> * Spalte 10, Zeile 6 - Spalte 10, Zeile 33; Abbildung 1 * <br> ----- | 1,3,5, 7-10, 12-14 | INV. B01D53/047 B01D53/053 |
| X | US 3 703 068 A (WAGNER JOHN L) 21. November 1972 (1972-11-21) <br><br> * Spalte 9, Zeile 46 - Spalte 10, Zeile 11; Anspruch 20; Abbildungen 1-4 * <br> ----- | 1,3,5, 7-10, 12-14 | |
| X | US 2008/148935 A1 (GIVENS JAMES A [US]) 26. Juni 2008 (2008-06-26) <br><br> * Absätze [0065], [0066], [0070], [0071]; Ansprüche 1,2,6,10,14; Abbildungen 4,11,12 * <br> ----- | 1,3,5, 7-10, 12-14 | |
| X | GB 1 551 732 A (BOC LTD) 30. August 1979 (1979-08-30) <br><br> * Ansprüche 1,8; Abbildung 1 * <br> ----- | 1,3,5, 7-10, 12-14 | **RECHERCHIERTE SACHGEBIETE (IPC)** <br><br> B01D |
| X | US 4 983 190 A (VERRANDO MARCEL G [US] ET AL) 8. Januar 1991 (1991-01-08) <br><br> * Spalte 5, Zeile 18 - Spalte 5, Zeile 54; Ansprüche 12-16; Abbildungen 1,2 * <br> ----- | 1,3,5, 7-10, 12-14 | |
| X | US 4 816 043 A (HARRISON STANLEY N [US]) 28. März 1989 (1989-03-28) <br><br> * Anspruch 1; Abbildung 1 * <br> ----- | 1,3,5, 7-10, 12-14 | |

-/--

~~Der vorliegende Recherchenbericht wurde für alle Patentans~~prüche erstellt

| Recherchenort | Abschlußdatum der Recherche | Prüfer |
|---|---|---|
| München | 20. Juli 2015 | de Biasio, Arnaldo |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..............................................................................................
& : Mitglied der gleichen Patentfamilie, übereinstimmendes
    Dokument

EPO FORM 1503 03.82 (P04C03)

**Europäisches Patentamt**

**European Patent Office**

**Office européen des brevets**

# EUROPÄISCHER RECHERCHENBERICHT

**Nummer der Anmeldung**

EP 15 00 0861

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 127 395 A (MCKEY PAUL M ET AL) 28. November 1978 (1978-11-28)<br><br>* Anspruch 1; Abbildungen 1-6 *<br>----- | 1,3,5, 7-10, 12-14 | |
| X | US 6 471 744 B1 (HILL THEODORE B [US]) 29. Oktober 2002 (2002-10-29)<br><br>* Spalte 5, Zeile 54 - Spalte 5, Zeile 63; Abbildungen 1-3 *<br>----- | 1,3-5, 7-10, 12-14 | |

**RECHERCHIERTE SACHGEBIETE (IPC)**

~~Der vorliegende Recherchenbericht wurde für alle Patentans~~prüche erstellt

| Recherchenort | Abschlußdatum der Recherche | Prüfer |
|---|---|---|
| München | 20. Juli 2015 | de Biasio, Arnaldo |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.................................................................................................
& : Mitglied der gleichen Patentfamilie, übereinstimmendes
    Dokument

EPO FORM 1503 03.82 (P04C03)

Europäisches
Patentamt

European
Patent Office

Office européen
des brevets

Nummer der Anmeldung

EP 15 00 0861

---

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

---

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

3, 4, 12-14(vollständig); 1, 5, 7-10(teilweise)

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches Patentamt

European Patent Office

Office européen des brevets

**MANGELNDE EINHEITLICHKEIT DER ERFINDUNG ERGÄNZUNGSBLATT B**

Nummer der Anmeldung

EP 15 00 0861

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 3, 4, 12-14(vollständig); 1, 5, 7-10(teilweise)

   Verfahren zur Lastanpassung, Mengen- und Reinheitskontrolle einer Druckwechseladsorptionsanlage, wobei die Druckwechseladsorptionsanlage einen Arbeitszyklus durchläuft und der Arbeitszyklus wenigstens einen Produktionstakt umfasst, wobei während des Produktionstaktes eine ununterbrochene Zufuhr eines Feedgases in wenigstens einen Adsorber erfolgt und der Zeitpunkt der Beendigung des Produktionstaktes bestimmt wird durch eine Detektion der Position einer Beladungsfront in dem wenigstens einen Adsorber.
   Druckwechseladsorptionsanlage umfassend wenigstens einen Adsorber zur Abtrennung einer stärker adsorbierenden Komponente aus einem Rohprodukt, wobei der Adsorber eine mittels eines Feedgasventils verschließbare Feedgaseinleitung und eine mittels eines Produktventils verschließbare Produktgasableitung aufweist, wobei die Druckwechseladsorptionsanlage in dem Adsorber in einer vorgegebenen Lage eine Messvorrichtung zur Messung der zeitlichen Veränderung von physikalischen Parametern aufweist.

   ---

2. Ansprüche: 2, 6, 11(vollständig); 1, 5, 7-10(teilweise)

   Verfahren zur Lastanpassung, Mengen- und Reinheitskontrolle einer Druckwechseladsorptionsanlage, wobei die Druckwechseladsorptionsanlage einen Arbeitszyklus durchläuft und der Arbeitszyklus wenigstens einen Produktionstakt umfasst, wobei während des Produktionstaktes eine ununterbrochene Zufuhr eines Feedgases in wenigstens einen Adsorber erfolgt und der Zeitpunkt der Beendigung des Produktionstaktes bestimmt wird durch eine Ermittlung der aus dem wenigstens einen Adsorber während des Produktionstaktes entnommene Menge MA(t) des Produktgases, wobei die Beendigung des Produktionstaktes erfolgt, wenn die Menge MA(t) größer oder gleich einer vorgegebenen Menge M Desi gn ist, und wobei die Menge MA(t) aus der dem Produktpuffer (3) entnommenen Menge Q(t) und dem Druckverlauf im Produktpuffer berechnet wird.
   Druckwechseladsorptionsanlage umfassend wenigstens einen Adsorber zur Abtrennung einer stärker adsorbierenden Komponente aus einem Rohprodukt, wobei der Adsorber eine mittels eines Feedgasventils verschließbare Feedgaseinleitung und eine mittels eines Produktventils verschließbare Produktgasableitung aufweist, einen Produktpuffer zur Aufnahme von gereinigtem Produktgas aus dem Adsorber über die Produktgasableitung, eine Mengenmesseinrichtung zur Bestimmung der dem Produktpuffer entnommene Menge, eine Druckmesseinrichtung zur Bestimmung

Europäisches
Patentamt

European
Patent Office

Office européen
des brevets

## MANGELNDE EINHEITLICHKEIT
## DER ERFINDUNG
## ERGÄNZUNGSBLATT B

**Nummer der Anmeldung**

EP 15 00 0861

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

des Drucks im Adsorber, wobei die Druckwechseladsorptionsanlage eine Steuer-und Regelungseinrichtung aufweist, die geeignet ist, die Messwerte der Druckmesseinrichtung und der Mengenmesseinrichtung aufzunehmen, zu verarbeiten und auf Basis dieser Werte eine Zeitpunkt zur Beendigung der Feedgaseinleitung und der Produktgasableitung zu ermitteln, wobei die Steuer-und Regelungseinrichtung ausgebildet ist, bei Vorliegen dieses Zeitpunkts einen Steuerimpuls an das Feedgasventil und das Produktventil zu senden.
---

**ANHANG ZUM EUROPÄISCHEN RECHERCHENBERICHT
ÜBER DIE EUROPÄISCHE PATENTANMELDUNG NR.**

EP 15 00 0861

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-07-2015

| Im Recherchenbericht angeführtes Patentdokument | Datum der Veröffentlichung | Mitglied(er) der Patentfamilie | Datum der Veröffentlichung |
|---|---|---|---|
| US 4941894 A | 17-07-1990 | CA 1332047 C<br>DE 3911574 A1<br>JP H01299623 A<br>US 4941894 A | 20-09-1994<br>26-10-1989<br>04-12-1989<br>17-07-1990 |
| US 3703068 A | 21-11-1972 | KEINE | |
| US 2008148935 A1 | 26-06-2008 | KEINE | |
| GB 1551732 A | 30-08-1979 | AU 502922 B2<br>AU 1426676 A<br>BR 7603407 A<br>ES 448318 A1<br>GB 1551732 A<br>JP S5210862 A<br>ZA 7603026 A | 16-08-1979<br>01-12-1977<br>21-12-1976<br>16-11-1977<br>30-08-1979<br>27-01-1977<br>27-04-1977 |
| US 4983190 A | 08-01-1991 | CA 1317893 C<br>DE 3627203 C1<br>FR 2671289 A1<br>GB 2238490 A<br>US 4983190 A | 18-05-1993<br>04-07-1996<br>10-07-1992<br>05-06-1991<br>08-01-1991 |
| US 4816043 A | 28-03-1989 | KEINE | |
| US 4127395 A | 28-11-1978 | AT 370340 B<br>BE 859837 A1<br>BR 7706937 A<br>CA 1085747 A<br>CH 635247 A5<br>DE 2746204 A1<br>DK 462577 A<br>ES 463266 A1<br>FI 773061 A<br>FR 2367530 A1<br>GB 1553780 A<br>IL 53099 A<br>IN 147180 B<br>IT 1090416 B<br>JP S5383983 A<br>JP S5718933 B2<br>MX 146177 A<br>NL 7711379 A<br>NO 773551 A<br>PT 67166 A<br>SE 435022 B | 25-03-1983<br>18-04-1978<br>08-08-1978<br>16-09-1980<br>31-03-1983<br>20-04-1978<br>19-04-1978<br>01-11-1978<br>19-04-1978<br>12-05-1978<br>10-10-1979<br>31-03-1981<br>08-12-1979<br>26-06-1985<br>24-07-1978<br>20-04-1982<br>21-05-1982<br>20-04-1978<br>19-04-1978<br>01-11-1977<br>03-09-1984 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT**
**ÜBER DIE EUROPÄISCHE PATENTANMELDUNG NR.**

EP 15 00 0861

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-07-2015

| Im Recherchenbericht angeführtes Patentdokument | | Datum der Veröffentlichung | Mitglied(er) der Patentfamilie | | Datum der Veröffentlichung |
|---|---|---|---|---|---|
| | | | US | 4127395 A | 28-11-1978 |
| | | | ZA | 7706063 A | 28-06-1978 |
| US 6471744 | B1 | 29-10-2002 | US | 6471744 B1 | 29-10-2002 |
| | | | WO | 03015899 A1 | 27-02-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2181752 A1